# EUROPEAN PATENT APPLICATION

(11) **EP 4 848 619 A1**
(43) Date of publication of application: **02.12.2026**
(21) Application number: 25747929.5
(22) Date of filing: 26.01.2025
(51) Int. Cl.: H04B 7/22

(54) **COMMUNICATION METHOD AND COMMUNICATION DEVICE**

(30) Priority: 02.02.2024 CN 202410156995
(71) Applicant: Huawei Technologies Co., Ltd., Shenzhen, Guangdong 518129 (CN)
(72) Inventor: ZHANG, Lili, Shenzhen, Guangdong 518129 (CN); XUE, Lixia, Shenzhen, Guangdong 518129 (CN); XUE, Yifan, Shenzhen, Guangdong 518129 (CN)
(74) Representative: Huawei European IPR
(86) International application number: PCT/CN2025/075129
(87) International publication number: WO 2025/162362

(57) **Abstract**

This application provides a communication method and a communication device. The method is applied to a first device. The method includes: receiving first signaling, where the first signaling indicates a first threshold; detecting a first signal; and determining, based on the first threshold and the first signal, whether to transmit a second signal, where the second signal is a backscatter signal based on the first signal. In the method, the first device may serve as a transmit end in a backscatter communication scenario. According to the method, a success rate of performing backscatter communication by the transmit end can be increased, ineffective energy consumption of the transmit end can be avoided or reduced, and system interference can be alleviated, thereby improving backscatter communication efficiency.

## Description

### CROSS-REFERENCE TO RELATED APPLICATIONS

This application claims priority to Chinese Patent Application No. 202410156995.4, filed with the China National Intellectual Property Administration on February 2, 2024 and entitled "COMMUNICATION METHOD AND COMMUNICATION DEVICE", which is incorporated herein by reference in its entirety.

### TECHNICAL FIELD

This application relates to the field of communication technologies, and in particular, to a communication method and a communication device.

### BACKGROUND

In the backscattering (backscattering)-based communication technology, an internet of things (internet of things, IoT) device may obtain energy from an excitation signal from an ambient device (for example, a base station (base station, BS) or a terminal device), to complete data modulation and actively send a backscatter signal to a receive end (Reader). Specifically, the surrounding device may serve as an excitation end, and the IoT device may serve as a transmit end. The surrounding device may transmit an excitation signal to the IoT device, the IoT device may modulate to-be-sent information to the detected excitation signal to obtain a backscatter signal and send the backscatter signal, and the receive end may demodulate the detected backscatter signal, to implement information transmission. The excitation end and the receive end may be a same device, or may be different devices. Currently, in a communication process implemented according to the foregoing method, the backscatter signal sent by the transmit end to the receive end cannot be successfully received by the receive end. This not only ineffectively wastes energy of the transmit end, but also causes system interference, affecting backscatter communication efficiency.

### SUMMARY

This application provides a communication method and a communication device, to improve a success rate of backscatter communication, avoid or reduce ineffective energy consumption of a transmit end in a backscatter communication scenario, and alleviate system interference, thereby improving backscatter communication efficiency.

According to a first aspect, an embodiment of this application provides a communication method. The method is applied to a side of a first device. To be specific, the method may be performed by the first device, or may be performed by a component (for example, a processor, a chip, or a chip system) in the first device. The method includes: receiving first signaling, where the first signaling indicates a first threshold; detecting a first signal; and determining, based on the first threshold and the first signal, whether to transmit a second signal, where the second signal is a backscatter signal based on the first signal.

In the method, the first signal may be used by the first device to transmit the second signal, namely, the backscatter signal, and the first threshold may be used as a reference threshold for the first device to determine whether to transmit the second signal, namely, the backscatter signal. The first device determines, based on the first signal and the first threshold, whether to finally transmit the second signal, so that the first device can transmit the backscatter signal in an appropriate scenario as much as possible, to ensure necessity and a success rate of transmitting the backscatter signal as much as possible, avoid or reduce ineffective energy consumption by the first device, and alleviate unnecessary interference on a channel, thereby improving communication efficiency.

In a possible design, the determining, based on the first threshold and the first signal, whether to transmit the second signal includes at least one of the following: when a sum of signal strength of the detected first signal and a half of a power parameter of the first device is greater than or equal to the first threshold, determining to transmit the second signal; when signal strength of the detected first signal is greater than or equal to the first threshold, determining to transmit the second signal; when a sum of signal strength of the detected first signal and a half of a power parameter of the first device is less than the first threshold, determining not to transmit the second signal; when signal strength of the detected first signal is less than the first threshold, determining not to transmit the second signal; when a sum of signal strength of the detected first signal, a product of a power amplification parameter of the first device and a sum of the signal strength of the detected first signal and a power loss parameter of the first device, and a first specified value is greater than or equal to the first threshold, determining to transmit the second signal; when a sum of signal strength of the detected first signal and a product of a power amplification parameter of the first device and a sum of the signal strength of the detected first signal and a power loss parameter of the first device is greater than or equal to the first threshold, determining to transmit the second signal; when a sum of signal strength of the detected first signal, a product of a power amplification parameter of the first device and a sum of the signal strength of the detected first signal and a power loss parameter of the first device, and a first specified value is less than the first threshold, determining not to transmit the second signal; when a sum of signal strength of the detected first signal and a product of a power amplification parameter of the first device and a sum of the signal strength of the detected first signal and a power loss parameter of the first device is less than the first threshold, determining not to transmit the second signal; when a path loss for transmitting the second signal is less than or equal to the first threshold, determining to transmit the second signal; or when a path loss for transmitting the second signal is greater than the first threshold, determining not to transmit the second signal.

In the method, in an optional implementation, the sum of the signal strength of the first signal detected by the first device and the half of the power parameter of the first device may be used as a power value that can be provided by the first device for transmitting the backscatter signal. Alternatively, the signal strength of the first signal detected by the first device may be used as a power value that can be provided by the first device for transmitting the backscatter signal. Alternatively, the sum of the signal strength of the first signal detected by the first device, the product of the power amplification parameter of the first device and the sum of the signal strength of the detected first signal and the power loss parameter of the first device, and the first specified value may be used as a power value that can be provided by the first device for transmitting the backscatter signal. The first threshold may be used as a power value required by the first device to transmit the backscatter signal, or may be used as a lower bound of the power value required by the first device to transmit the backscatter signal. The first device compares the first threshold with the power value that can be provided by the first device for transmitting the backscatter signal, to determine whether it is necessary to transmit the backscatter signal. Specifically, when the power value that can be provided by the first device for transmitting the backscatter signal is greater than or equal to the first threshold, it indicates that the first device can successfully transmit the backscatter signal, that is, it can be ensured that the backscatter signal transmitted by the first device can be successfully received by a receive end. Therefore, it is necessary and possible for the first device to transmit the backscatter signal, to increase a success rate of backscatter communication and improve communication efficiency of backscatter communication. When the power value that can be provided by the first device for transmitting the backscatter signal is less than the first threshold, it indicates that the first device can hardly successfully transmit the backscatter signal, that is, it cannot be ensured that the backscatter signal transmitted by the first device can be successfully received by a receive end. Therefore, the first device may not transmit the backscatter signal, to reduce unnecessary ineffective energy consumption on the side of the first device and alleviate unnecessary interference on a channel. In another optional implementation, the first threshold may be used as a path loss requirement for sending the backscatter signal by the first device. The path loss for transmitting the second signal by the first device may be used as an actual path loss for transmitting the backscatter signal by the first device. The first device compares the first threshold with the actual path loss for transmitting the backscatter signal by the first device, to determine whether it is necessary to transmit the backscatter signal. Specifically, when the actual path loss for transmitting the backscatter signal by the first device is greater than or equal to the first threshold, it indicates that the first device can successfully transmit the backscatter signal, that is, it can be ensured that the backscatter signal transmitted by the first device can be successfully received by a receive end. Therefore, it is necessary and possible for the first device to transmit the backscatter signal, to increase a success rate of backscatter communication and improve communication efficiency of backscatter communication. When the actual path loss for transmitting the backscatter signal by the first device is less than the first threshold, it indicates that the first device can hardly successfully transmit the backscatter signal, that is, it cannot be ensured that the backscatter signal transmitted by the first device can be successfully received by a receive end. Therefore, the first device may not transmit the backscatter signal, to reduce unnecessary ineffective energy consumption on the side of the first device and alleviate unnecessary interference on a channel.

In a possible design, the first signal is a signal on a first path; and the transmitting the second signal includes: transmitting the second signal on the first path; or transmitting the second signal on a second path.

In the method, a device that transmits the first signal is an excitation end, and a device that detects the second signal is a receive end. According to the method, the first device may transmit the second signal on a path that is the same as or different from a path on which the first signal is received. A scenario in which the first device transmits the second signal on the path (namely, the first path) that is the same as the path (namely, the first path) on which the first signal is received is a scenario in which the excitation end and the receive end are co-sited. A scenario in which the first device transmits the second signal on the path (namely, the second path) that is the different from the path (namely, the first path) on which the first signal is received is a scenario in which the excitation end and the receive end are inter-sited. Therefore, the method provided in this embodiment of this application may be applied to a scenario in which the excitation end and the receive end are co-sited or inter-sited.

In a possible design, the first signaling includes the first threshold or a first threshold range, where the first threshold range is for determining the first threshold.

In the method, the first device may directly obtain the first threshold indicated by the first signaling, or may determine the first threshold based on the first threshold range indicated by the first signaling. This has high flexibility. In the method in which the first device directly obtains the first threshold indicated by the first signaling, processing efficiency of the first device is high. In the method in which the first device determines the first threshold based on the first threshold range indicated by the first signaling, processing efficiency of a transmit end (or an indication end) of the first threshold (or the first threshold range) can be improved.

In a possible design, the method further includes: receiving second signaling, where the second signaling indicates a first power loss parameter range, and the first power loss parameter range is for determining the first threshold.

In the method, the first power loss parameter range may correspond to the first threshold range. The first device may determine the first threshold based on the first power parameter range, a correspondence between the first power loss parameter range and the first threshold range, and the first threshold range, to ensure that the first device can obtain the first threshold.

In a possible design, a difference between the power loss parameter of the first device and the lower bound of the first power loss parameter range is equal to a difference between the first threshold and the lower bound of the first threshold range; and/or a difference between the upper bound of the first power loss parameter range and the power loss parameter of the first device is equal to a difference between the upper bound of the first threshold range and the first threshold. In the method, the first device may obtain the first threshold through calculation in different manners. This has high flexibility.

In a possible design, before receiving the first signaling, the method further includes: sending third signaling, where the third signaling indicates the power loss parameter of the first device.

In the method, the first device sends the third signaling to indicate the power loss parameter of the first device, so that a receive end of the third signaling can determine the first threshold based on the power loss parameter of the first device, and transmit the first signaling that indicates the first threshold. In this way, the first device can obtain the first threshold, and determine, based on the first threshold, whether to transmit the backscatter signal.

In a possible design, the method further includes: when determining not to transmit the second signal, performing energy storage.

In the method, when determining not to transmit the second signal, the first device can perform energy storage for subsequent backscatter signal transmission. This helps increase a success rate of subsequent backscatter signal transmission.

In a possible design, the first signal is an excitation signal.

According to a second aspect, an embodiment of this application provides a communication method. The method is applied to a side of a second device. To be specific, the method may be performed by the second device, or may be performed by a component (for example, a processor, a chip, or a chip system) in the second device. The method includes: sending first signaling, where the first signaling indicates a first threshold, the first threshold is used by a first device to determine whether to transmit a second signal, and the second signal is a backscatter signal based on a first signal detected by the first device.

In the method, the first threshold may be used as a reference threshold for the first device to determine whether to transmit the second signal, namely, the backscatter signal. The second device sends the first signaling to indicate the first threshold, so that the first device can obtain the first threshold, and the first device can determine, based on the detected first signal and the first threshold, whether to finally transmit the second signal. In this way, the first device can transmit the backscatter signal in an appropriate scenario as much as possible, to ensure necessity and a success rate of transmitting the backscatter signal as much as possible, avoid or reduce ineffective energy consumption by the first device, and alleviate unnecessary interference on a channel, thereby improving communication efficiency.

In a possible design, the method further includes: transmitting the first signal on a first path; and determining the first threshold based on a power for transmitting the first signal, a target power for detecting the second signal, and a power parameter of the first device; or determining the first threshold based on a power for transmitting the first signal and a target power for detecting the second signal.

Optionally, the second signal is a signal on the first path.

In the foregoing method, in an optional implementation, the second device may determine the first threshold based on parameters related to backscatter communication of the second device (namely, the power for transmitting the first signal and the target power for detecting the second signal) and a parameter related to backscatter communication of the first device (namely, a power loss parameter of the first device). In this way, the first device can directly use signal strength of the detected first signal as a power provided by the first device for transmitting the backscatter signal, thereby improving processing efficiency on a side of the first device. In another optional implementation, the second device may determine the first threshold based on parameters related to backscatter communication of the second device, without a need to obtain related parameters from another device. Therefore, processing efficiency on the side of second device is high. In the foregoing method, the first signal and the second signal are signals on a same path (namely, the first path). Therefore, the foregoing method may be applied to a scenario in which an excitation end and a receive end are co-sited.

In a possible design, the determining the first threshold based on the power for transmitting the first signal, the target power for detecting the second signal, and the power parameter of the first device includes: using a half of a difference between the sum of the power for transmitting the first signal and the target power for detecting the second signal and the power parameter of the first device as the first threshold; using a ratio of a first value to a second value as the first threshold, where the first value is a difference between a sum of the power for transmitting the first signal and the target power for detecting the second signal and a third value, the third value is a product of the power loss parameter of the first device and a power amplification parameter of the first device, and the second value is a sum of the power amplification parameter of the first device and 1; or using a ratio of a first value to a second value as the first threshold, where the first value is a difference between a sum of the power for transmitting the first signal and the target power for detecting the second signal and a third value and a first specified value, the third value is a product of the power loss parameter of the first device and a power amplification parameter of the first device, and the second value is a sum of the power amplification parameter of the first device and 1.

The foregoing method may be applied to a scenario in which the first device uses the signal strength of the detected first signal as the power provided by the first device for transmitting the backscatter signal. In the method, the power parameter of the first device may include the power amplification parameter and/or the power loss parameter of the first device. In the first method for determining the first threshold in the foregoing method, when the power parameter of the first device includes the power amplification parameter of the first device, the power amplification parameter of the first device may indicate a superposable power provided by the first device. In the second method for determining the first threshold in the foregoing method, when the power parameter of the first device includes the power amplification parameter of the first device, the power amplification parameter of the first device may indicate a degree to which the first device can amplify a power. According to the foregoing method, in different scenarios, the second device may accurately obtain the first threshold through calculation in different manners.

In a possible design, the determining the first threshold based on the power for transmitting the first signal and the target power for detecting the second signal includes: using a half of a sum of the power for transmitting the first signal and the target power for detecting the second signal as the first threshold; or using a sum of the power for transmitting the first signal and the target power for detecting the second signal as the first threshold.

The foregoing method may be applied to a scenario in which the first device obtains, through calculation based on a plurality of parameters, the power provided by the first device for transmitting the backscatter signal. In different scenarios, the second device may accurately obtain the first threshold through calculation in different manners.

In a possible design, the method further includes: determining the power for transmitting the first signal, the power parameter of the first device, and a path loss of the first signal; and determining the first threshold based on the power for transmitting the first signal, the target power for detecting the second signal, the power parameter of the first device, and the path loss of the first signal.

Optionally, the first signal is a signal on the first path, and the second signal is a signal on a second path.

In the foregoing method, the second device may accurately determine, based on the obtained parameters related to backscatter communication, the first threshold used as a path loss requirement. In the foregoing method, the first signal and the second signal are signals on different paths. Therefore, the foregoing method may be applied to a scenario in which an excitation end and a receive end are inter-sited.

In a possible design, the determining the first threshold based on the power for transmitting the first signal, the target power for detecting the second signal, the power parameter of the first device, and the path loss of the first signal includes: using, as the first threshold, a difference between a sum of the power for transmitting the first signal and the power parameter of the first device and the target power for detecting the second signal and the path loss of the first signal; using, as the first threshold, a difference between the target power for detecting the second signal and a sum of a first specified value and a product of a fourth value and the power amplification parameter of the first device, where the fourth value is a difference between the path loss of the first signal and a sum of the power for transmitting the first signal and the power loss parameter of the first device; or using, as the first threshold, a difference between the target power for detecting the second signal and a product of a fourth value and the power amplification parameter of the first device, where the fourth value is a difference between the path loss of the first signal and a sum of the power for transmitting the first signal and the power loss parameter of the first device.

In the method, the power parameter of the first device may include the power amplification parameter and/or the power loss parameter of the first device. In the first method for determining the first threshold in the foregoing method, when the power parameter of the first device includes the power amplification parameter of the first device, the power amplification parameter of the first device may indicate a superposable power provided by the first device. In the second method for determining the first threshold in the foregoing method, when the power parameter of the first device includes the power amplification parameter of the first device, the power amplification parameter of the first device may indicate a degree to which the first device can amplify a power. According to the foregoing method, in different scenarios, the first device may accurately obtain the first threshold through calculation in different manners.

In a possible design, determining the path loss of the first signal includes: determining that the path loss of the first signal is a specified value; or receiving fifth signaling, where the fifth signaling indicates the path loss of the first signal.

In the method, the second device may obtain the path loss of the first signal in different manners. This has high flexibility and practicability.

In a possible design, a distance of the first path is less than or equal to a specified distance.

In the method, the first path is a path between the excitation end and a transmit end. The method for determining the first threshold used as the path loss requirement provided in the foregoing method may be preferably applied to a scenario in which the first path is short, that is, a scenario in which the distance between the excitation end and the transmit end is short.

In a possible design, the first signaling includes the first threshold or a first threshold range of the first threshold, where the first threshold range is for determining the first threshold.

In the method, the second device may directly indicate the first threshold by using the first signaling, or may indicate, based on the first signaling, the first threshold range for determining the first threshold. This has high flexibility. In the method in which the second device directly indicates the first threshold by using the first signaling, the second device needs to separately determine and indicate, for different devices, first thresholds corresponding to the different devices. As a result, processing efficiency is low. In the method in which the first device indicates, based on the first signaling, the first threshold range for determining the first threshold, the second device may obtain a plurality of different values (that is, values in the first threshold range) of the first threshold through centralized calculation. This helps improve processing efficiency.

In a possible design, the method further includes: sending second signaling, where the second signaling indicates a first power loss parameter range, and the first power loss parameter range is for determining the first threshold.

In the method, the first power loss parameter range may correspond to the first threshold range. The second device indicates the first power loss parameter range by using the second signaling, so that a receive end of the second signaling can determine the first threshold based on the first power parameter range, a correspondence between the first power loss parameter range and the first threshold range, and the first threshold range.

In a possible design, a difference between the power loss parameter of the first device and the lower bound of the first power loss parameter range is equal to a difference between the first threshold and the lower bound of the first threshold range; and/or a difference between the upper bound of the first power loss parameter range and the power loss parameter of the first device is equal to a difference between the upper bound of the first threshold range and the first threshold.

In the method, there are a plurality of manners of obtaining the first threshold through calculation based on the first power loss parameter range and the first threshold range. This has high flexibility.

In a possible design, the first signal is an excitation signal.

According to a third aspect, an embodiment of this application provides a communication method. The method is applied to a side of a first device. To be specific, the method may be performed by the first device, or may be performed by a component (for example, a processor, a chip, or a chip system) in the first device. The method is applied to a first device. The method includes: receiving first signaling, where the first signaling indicates a first target power value; detecting a first signal; and determining, based on the first target power value and the first signal, whether to transmit a second signal, where the second signal is a backscatter signal based on the first signal.

In the method, the first signal may be used by the first device to transmit the second signal, namely, the backscatter signal, and the first target power value is a power (or signal strength) at which a receive end of the second signal expects to detect the second signal. The first target power value may be used as reference data for the first device to determine whether to transmit the second signal, namely, the backscatter signal. The first device determines, based on the first signal and the first target power value, whether to finally transmit the second signal, so that the first device can transmit the backscatter signal in an appropriate scenario as much as possible, to ensure necessity and a success rate of transmitting the backscatter signal as much as possible, avoid or reduce ineffective energy consumption by the first device, and alleviate unnecessary interference on a channel, thereby improving communication efficiency.

In a possible design, the determining, based on the first target power value and the first signal, whether to transmit the second signal includes: determining, based on the first target power value, a target transmit power of the second signal; determining, based on the first signal, a power for transmitting the second signal; and determining, based on the target transmit power of the second signal and the power for transmitting the second signal, whether to transmit the second signal.

In the method, the target transmit power of the second signal may be used as a power required by the first device to transmit the backscatter signal, or may be used as a lower bound of the power required by the first device to transmit the backscatter signal. The power for transmitting the second signal may be used as a power provided by the first device for transmitting the backscatter signal. The first device may compare whether a power used by the first device for transmitting the backscatter signal meets a requirement of the power required for transmitting the backscatter signal, to determine whether the power provided by the first device is sufficient for transmitting the backscatter signal, so as to determine whether to transmit the backscatter signal. The method can ensure necessity and a success rate of transmitting the backscatter signal by the first device, avoid or reduce unnecessary ineffective power consumption on the side of the first device, and alleviate unnecessary interference on a channel, thereby improving backscatter communication efficiency.

In a possible design, the determining, based on the target transmit power of the second signal and the power for transmitting the second signal, whether to transmit the second signal includes: when the power for transmitting the second signal is greater than or equal to the target transmit power of the second signal, determining to transmit the second signal; and/or when the power for transmitting the second signal is less than the target transmit power of the second signal, determining not to transmit the second signal.

In the method, when the power used by the first device to transmit the backscatter signal is greater than or equal to the power required for transmitting the backscatter signal, the first device may determine that the power provided by the first device is sufficient for transmitting the backscatter signal. Therefore, the first device needs to and can transmit the backscatter signal, thereby improving a success rate and communication efficiency of backscatter communication. When the power used by the first device to transmit the backscatter signal is less than the power required for transmitting the backscatter signal, the first device may determine that the power provided by the first device is insufficient for successfully transmitting the backscatter signal. Therefore, the first device may not transmit the backscatter signal, to reduce unnecessary ineffective energy consumption on the side of the first device and alleviate unnecessary interference on a channel.

In a possible design, the first signal is a signal on a first path; and the transmitting the second signal includes: transmitting the second signal on the first path; or transmitting the second signal on a second path.

In the method, a device that transmits the first signal is an excitation end, and a device that detects the second signal is a receive end. According to the method, the first device may transmit the second signal on a path that is the same as or different from a path on which the first signal is received. A scenario in which the first device transmits the second signal on the path (namely, the first path) that is the same as the path (namely, the first path) on which the first signal is received is a scenario in which the excitation end and the receive end are co-sited. A scenario in which the first device transmits the second signal on the path (namely, the first path) that is the different from the path (namely, the second path) on which the first signal is received is a scenario in which the excitation end and the receive end are inter-sited. Therefore, the method provided in this embodiment of this application may be applied to a scenario in which the excitation end and the receive end are co-sited or inter-sited.

In a possible design, the determining the target transmit power of the second signal based on the first target power value includes: determining a path loss for transmitting the second signal; determining a target transmit power candidate value of the second signal based on the first target power and the path loss for transmitting the second signal; and using the target transmit power candidate value of the second signal as the target transmit power of the second signal; or using a smaller value between the target transmit power candidate value of the second signal and a specified power value as the target transmit power of the second signal.

In the foregoing method, the target transmit power candidate value of the second signal is a power value actually required by the second device for transmitting the second signal, and the second device may accurately obtain the value through calculation. In an optional implementation, the second device may directly use the value as the target transmit power of the second signal, to ensure accuracy of determining, based on the target transmit power of the second signal, whether to transmit the second signal. In another optional implementation, the second device may use a smaller value between the value and the specified power value as the target transmit power of the second signal, so that the power required for transmitting the second signal can be limited within a specified range, thereby avoiding excessively high energy consumption caused by transmission of a reflected signal when a power range required for transmitting the second signal is excessively large.

In a possible design, the determining the path loss for transmitting the second signal includes: determining, based on a transmit power of the first signal and signal strength of the detected first signal, the path loss for transmitting the second signal.

The method may be applied to a scenario in which the excitation end and the receive end are co-sited. In this scenario, transmission paths of the first signal and the second signal are the same (both are the first path). Therefore, the first device may determine, based on the transmit power of the first signal and the signal strength of the detected first signal, a path loss for transmitting the first signal, and use the path loss for transmitting the first signal as the path loss for transmitting the second signal. According to the method, the first device can conveniently and quickly determine the path loss for transmitting the second signal.

In a possible design, before determining the path loss for transmitting the second signal, the method further includes: receiving second signaling, where the second signaling indicates the transmit power of the first signal.

According to the method, the first device may obtain the transmit power of the first signal, and determine, based on the transmit power of the first signal, the path loss for transmitting the second signal.

In a possible design, the determining, based on the first signal, the power for transmitting the second signal includes: determining, based on the signal strength of the detected first signal and a power parameter of the first device, the power for transmitting the second signal.

The determining, based on the signal strength of the detected first signal and the power parameter of the first device, the power for transmitting the second signal includes: using a sum of the signal strength of the detected first signal and the power parameter of the first device as the power for transmitting the second signal; using, as the power for transmitting the second signal, a product of a power amplification parameter of the first device and a sum of the signal strength of the detected first signal and a power loss parameter of the first device; or using, as the power for transmitting the second signal, a sum of a first specified value and a product of a power amplification parameter of the first device and a sum of the signal strength of the detected first signal and a power loss parameter of the first device.

In the first method for determining the power for transmitting the second signal in the foregoing method, when the power parameter of the first device includes the power amplification parameter of the first device, the power amplification parameter of the first device may indicate a superposable power provided by the first device. In the second method for determining the power for transmitting the second signal in the foregoing method, when the power parameter of the first device includes the power amplification parameter of the first device, the power amplification parameter of the first device may indicate a degree to which the first device can amplify a power. According to the foregoing method, in different scenarios, the first device may accurately obtain, through calculation in different manners, the power for transmitting the second signal. For example, the first device may select, according to a specific meaning of the power amplification parameter of the first device, a corresponding manner to calculate the power for transmitting the second signal.

In a possible design, the first signaling includes any one of the following: the first target power value, a ratio of the first target power value to a first specified power value, and a power level corresponding to the first target power value, where different power levels correspond to different power values.

Optionally, when the first signaling includes the ratio, the first target power value is determined based on the ratio and the first specified power value; or when the first signaling includes the power level, the first target power value is determined based on the power level.

In the method, the first device may obtain the first target power value in different manners. This has high flexibility and practicability.

In a possible design, the first target power value corresponds to a first distance range, and a distance over which the second signal is to be transmitted is within the first distance range.

In the method, the distance over which the second signal is to be transmitted is a distance between a transmit end and the receive end. The first target power value corresponds to the first distance range of the distance, so that the target transmit power of the second signal determined by the first device based on the first target power value is closer to a power actually required by the first device to transmit the second signal, thereby improving accuracy of determining, based on the target transmit power of the second signal, whether to transmit the second signal, and reducing energy waste on the side of the first device.

In a possible design, the method further includes: when determining not to transmit the second signal, performing energy storage.

In the method, when determining not to transmit the second signal, the first device can perform energy storage for subsequent backscatter signal transmission. This helps increase a success rate of subsequent backscatter signal transmission.

In a possible design, the first signal is an excitation signal.

According to a fourth aspect, an embodiment of this application provides a communication method. The method is applied to a side of a second device. To be specific, the method may be performed by the second device, or may be performed by a component (for example, a processor, a chip, or a chip system) in the second device. The method includes: sending first signaling, where the first signaling includes a first target power value, the first target power value is used by a first device to determine whether to transmit a second signal, and the second signal is a backscatter signal based on a first signal detected by the first device.

In the method, the first target power value is a power (or signal strength) at which the second device expects to detect the second signal. The second device sends the first signaling to indicate the first target power value, so that the first device can obtain the first target power value, and the first device can determine, based on the first target power value and the detected first signal, whether to transmit the second signal, that is, the backscatter signal. Therefore, the method helps the first device transmit the backscatter signal in an appropriate scenario as much as possible, to ensure necessity and a success rate of transmitting the backscatter signal as much as possible, avoid or reduce ineffective energy consumption by the first device, and alleviate unnecessary interference on a channel, thereby improving communication efficiency.

In a possible design, the method further includes: transmitting the first signal on a first path. The second signal is a signal on the first path.

In the foregoing method, the first signal and the second signal are signals on a same path. Therefore, the foregoing method may be applied to a scenario in which an excitation end and a receive end are co-sited.

In a possible design, after transmitting the first signal on the first path, the method further includes: transmitting a third signal on the first path when a specified time is up and the second signal is not detected, where the third signal is an excitation signal, and a power for transmitting the third signal is greater than a power for transmitting the first signal.

In the method, after the second device transmits the first signal, namely, the excitation signal, on the first path, when the specified time is up and the second signal, namely, the backscatter signal, is not detected, it indicates that the first device cannot transmit, based on the signal strength of the detected first signal, the backscatter signal that can be successfully received by the second device. Therefore, the second device transmits the excitation signal, namely, the third signal, again based on an increased power, so that the second device can provide, for the first device by using the excitation signal, more powers that can be used to transmit the backscatter signal, thereby improving a success rate of transmitting the backscatter signal by the first device.

In a possible design, a power level corresponding to the power for transmitting the third signal is different from a power level corresponding to the power for transmitting the first signal. According to the method, the second device may determine, based on a level, the power for transmitting the excitation signal.

In a possible design, the method further includes: sending second signaling, where the second signaling indicates the power for transmitting the first signal, and the power for transmitting the first signal is used by the first device to determine whether to transmit the second signal.

In the method, the second device indicates, by using the second signaling, the power at which the second device transmits the first signal, so that the first device can obtain the power value, and determine, based on the power value, whether to transmit the backscatter signal.

In a possible design, the first signal is a signal on the first path, and the second signal is a signal on a second path. In the foregoing method, the first signal and the second signal are signals on different paths. Therefore, the foregoing method may be applied to a scenario in which an excitation end and a receive end are inter-sited.

In a possible design, the first signaling includes any one of the following: the first target power value, a ratio of the first target power value to a first specified power value, and a power level corresponding to the first target power value, where different power levels correspond to different power values. According to the method, the second device may indicate the first target power value in different manners. This has high flexibility and practicability.

In a possible design, the first target power value corresponds to a first distance range, and a distance over which the second signal is to be transmitted is within the first distance range.

In the method, the distance over which the second signal is to be transmitted is a distance between a transmit end and the receive end. The first target power value indicated by the second device by using the first signaling corresponds to the first distance range of the distance, so that the target transmit power of the second signal determined based on the first target power value by the first device that obtains the first target power value is closer to a power actually required by the first device to transmit the second signal, thereby improving accuracy of determining, by the first device based on the target transmit power of the second signal, whether to transmit the second signal, and reducing energy waste on a side of the first device.

In a possible design, the first signal is an excitation signal.

According to a fifth aspect, an embodiment of this application provides a communication device, including: a module configured to perform the method according to any one of the first aspect or the possible implementations of the first aspect, a module configured to perform the method according to any one of the second aspect or the possible implementations of the second aspect, a module configured to perform the method according to any one of the third aspect or the possible implementations of the third aspect, or a module configured to perform the method according to any one of the fourth aspect or the possible implementations of the fourth aspect.

According to a sixth aspect, an embodiment of this application provides a communication device, including: at least one processor. The at least one processor is configured to cause the communication device to perform the method according to any one of the first aspect or the possible implementations of the first aspect, the method according to any one of the second aspect or the possible implementations of the second aspect, the method according to any one of the third aspect or the possible implementations of the third aspect, or the method according to any one of the fourth aspect or the possible implementations of the fourth aspect.

In a possible design, the at least one processor is configured to execute instructions stored in a memory. The memory may be included in the communication device, or may be located outside the communication device.

In a possible design, the communication device further includes a communication interface. The communication interface is configured to receive a signal from another communication device other than the communication device and transmit the signal to the processor, or send a signal from the processor to another communication device other than the communication device.

In a possible design, the communication device further includes a transceiver, and the at least one processor is configured to control the transceiver to receive or send a signal. The transceiver may include a receiver and a transmitter. The receiver is configured to receive a signal, and the transmitter is configured to send a signal.

The communication devices in the fifth aspect and the sixth aspect may be a first device or a second device, or may be a component (for example, a processor, a chip, or a chip system) in the first device or the second device. The communication device may be a device or an apparatus with a chip, a device or an apparatus with an integrated circuit, or a chip, a chip system, a module, or a control unit in the foregoing terminal device or communication device. This is not specifically limited in this application.

According to a seventh aspect, this application provides a computer-readable storage medium. The computer-readable storage medium includes a computer program or instructions. When the computer program or the instructions are run on a communication device, the communication device is caused to perform the method according to any one of the first aspect or the possible implementations of the first aspect, the method according to any one of the second aspect or the possible implementations of the second aspect, the method according to any one of the third aspect or the possible implementations of the third aspect, or the method according to any one of the fourth aspect or the possible implementations of the fourth aspect.

According to an eighth aspect, this application provides a computer program product. The computer program product includes a computer program or instructions. When the computer program or the instructions are executed by a communication device, the method according to any one of the first aspect or the possible implementations of the first aspect is implemented, the method according to any one of the second aspect or the possible implementations of the second aspect is implemented, the method according to any one of the third aspect or the possible implementations of the third aspect is implemented, or the method according to any one of the fourth aspect or the possible implementations of the fourth aspect is implemented.

For technical effects that can be achieved in any one of the fifth aspect to the eighth aspect, refer to descriptions of the beneficial effects in the first aspect to the fourth aspect. Details are not described herein again.

### BRIEF DESCRIPTION OF DRAWINGS

FIG. 1 is a diagram of an architecture of a backscatter communication system according to an embodiment of this application;
FIG. 2a is a schematic of a topology structure of a first communication system according to an embodiment of this application;
FIG. 2b is a schematic of a topology structure of a second communication system according to an embodiment of this application;
FIG. 2c is a schematic of a topology structure of a third communication system according to an embodiment of this application;
FIG. 2d is a schematic of a topology structure of a fourth communication system according to an embodiment of this application;
FIG. 3 is a diagram of a first communication method according to an embodiment of this application;
FIG. 4 is a diagram of a communication system in an ambient IoT scenario according to an embodiment of this application;
FIG. 5 is a diagram of a second communication method according to an embodiment of this application;
FIG. 6 is a diagram of a communication system in another ambient IoT scenario according to an embodiment of this application;
FIG. 7 is a diagram of a third communication method according to an embodiment of this application;
FIG. 8 is a diagram of a fourth communication method according to an embodiment of this application;
FIG. 9 is a diagram of a communication device according to an embodiment of this application; and
FIG. 10 is a diagram of a structure of a communication device according to an embodiment of this application.

### DESCRIPTION OF EMBODIMENTS

The following describes in detail embodiments of this application with reference to accompanying drawings. The method and the device are based on a same technical concept. Because the method and the device have similar principles for resolving the problem, for implementation of the device and the method, refer to each other. No repeated descriptions are provided.

In the following, some terms in this application are described, to help a person skilled in the art have a better understanding.
(1) A terminal device is a user-side entity configured to receive or transmit a signal, and has a wireless transceiver function. Optionally, the terminal device includes a device that provides data connectivity for a user. The terminal device may also be referred to as a terminal, user equipment (user equipment, UE), a mobile station (mobile station, MS), a mobile terminal (mobile terminal, MT), or the like.

For example, the terminal device may be a handheld device having a wireless connection function or a processing device connected to a wireless modem. The terminal device may exchange voice and/or data with a network device like a radio access network (radio access network, RAN) device. The terminal device may include a V2X terminal device, a wireless terminal device, a mobile terminal device, a device-to-device (device-to-device, D2D) terminal device, a machine-to-machine/machine-type communication (machine-to-machine/machine-type communication, M2M/MTC) terminal device, an IoT device, a virtual reality (virtual reality, VR) device, an augmented reality (augmented reality, AR) device, an industrial control (industrial control) device, a self-driving (self-driving) device, a telemedicine (remote medical) device, a smart grid (smart grid) device, a smart home device, a smart office device, an intelligent transportation device, a mobile phone, a tablet computer, a computer with a wireless transceiver function, a vehicle, a helicopter, an airplane, a ship, a robotic arm, an unmanned aerial vehicle, a robot, an access point (access point, AP), a remote terminal (remote terminal), an access terminal (access terminal), a user agent (user agent), a user device (user device), a wearable device, an in-vehicle device, customer premise equipment (customer premise(s) equipment, CPE), or the like. Optionally, the customer premise equipment may also be referred to as a client device. A device form of the terminal device is not limited in embodiments of this application.

The terminal device may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wear, smart transportation, and smart city.

(2) An access network device is a network-side entity configured to transmit and/or receive a signal, and may be used as a device that connects a terminal device to a wireless network in a communication system. As a node in a radio access network, the access network device may also be referred to as a base station, or may be referred to as a radio access network (radio access network, RAN) device or a radio access network node.

For example, the access network device includes but is not limited to a base station, a base transceiver station (base transceiver station, BTS), a NodeB (NodeB), an evolved NodeB (evolved NodeB, eNodeB/eNB), a gNodeB/gNB, a transmission reception point (transmission reception point, TRP), a base station in a subsequent evolution of the 3rd Generation Partnership Project (3GPP) specifications/system, a radio network controller (radio network controller, RNC), an access point (access point, AP), a base station controller (base station controller, BSC), a home base station (for example, a home evolved NodeB or a home NodeB, HNB), a baseband unit (baseband unit, BBU), and an access node, a wireless relay node, a wireless backhaul node, and the like in a wireless fidelity (wireless fidelity, Wi-Fi) system. The base station may be a macro base station, a micro base station, a pico base station, a small cell, a relay station, any other radio access device, a base station in next-generation communication, or the like. A plurality of base stations may support networks using a same access technology, or may support networks using different access technologies. The base station may include one or more co-site or non-co-site transmission reception points. For example, the access network device may alternatively be a radio controller, a central unit (central unit, CU), and/or a distributed unit (distributed unit, DU) in a cloud radio access network (cloud radio access network, CRAN) scenario. Alternatively, the radio access network device may be a server or the like. For example, a network device in a vehicle-to-everything (vehicle-to-everything, V2X) technology may be a road side unit (road side unit, RSU).

(3) A communication device is a device that supports a wireless communication technology and that can communicate with another apparatus or device. The communication device may also be referred to as a communication apparatus. In embodiments of this application, a specific representation form of the communication device is not limited. For example, the communication device may be a terminal device, an access network device, an internet of things device, or the like. It should be noted that the communication device mentioned in this application may be the communication device, or may be a chip, a functional module, an integrated circuit, or the like that is in the communication device and that performs the method provided in this application. This is not specifically limited in this application.

(4) Ambient internet of things (Ambient IoT) is a technology in which an IoT device collects energy from an ambient environment (for example, radio waves, solar energy, wind power, vibration, or heat) to meet operating requirements of the IoT device. The IoT device may not use a battery or limited storage. In this application, the environment may also be understood as surrounding, that is, ambient IoT may also be understood as surrounding IoT. The ambient IoT may also be referred to as passive IoT. A source is a power supply or an energy source, and passive means that no external energy source (for example, no battery) is connected. The passive IoT refers to passive terminal nodes in the IoT, not passive networks in the IoT. The passive terminal node does not mean that the terminal node does not use energy (for example, electric power), but rather that the terminal node obtains energy in a different manner.

(5) Backscatter (backscatter) communication is a modulation and transmission technology with extremely low power consumption designed based on a principle of radio frequency signal backscattering. The backscatter communication technology is a passive communication technology with extremely low power consumption and low costs, and is applicable to a scenario such as communication of a device (for example, the IoT device) sensitive to power consumption. An operating principle of the backscatter communication is as follows: An excitation end activates a transmit end by sending a radio frequency excitation signal, the transmit end modulates the information onto the radio-frequency signal through backscatter communication and sends a backscatter signal, and a receive end receives and demodulates a backscatter signal from the transmit end, to implement information transmission. The backscatter communication technology usually involves three communication nodes: an exciter (namely, the excitation end), a reflector (namely, the transmit end), and a receiver (namely, the receive end). For the exciter, the reflector, and the receiver, refer to the following related descriptions. Details are not described herein.

A backscatter communication technology applied to the ambient IoT may be referred to as an ambient backscatter communication technology. In the ambient backscatter communication technology, a terminal node (that is, an IoT device or an ambient IoT device) in the ambient IoT may obtain energy from a radio frequency signal (for example, a radio frequency signal from an ambient device (such as a base station or a router)) in an ambient environment, to complete data modulation and actively send a signal to the receive end.

In this application, backscattering may also be understood as reflection, that is, the backscatter signal may also be understood as a reflected signal. The excitation signal may also be understood as a trigger signal, or a carrier wave (carrier wave).

(6) A path loss (path loss), also referred to as a propagation loss, is a loss generated when a signal is propagated in space, and may be specifically a loss caused by a propagation environment between the transmit end and the receive end. The path loss is caused by radiation spread of a transmit power and propagation characteristics of a channel, and can reflect a change of an average receive signal power in a macro range. Theoretically, for a same transmit/receive distance (or transmission distance, communication distance, or the like), path losses are also the same.

In this embodiment of this application, the path loss may also be referred to as PL for short.

(7) A transmit power refers to energy consumed by signal transmission. In wireless communication, the transmit power is usually used to describe strength (or powers) of signals sent by a wireless device. The wireless device can transmit information by sending electromagnetic waves, and strength of the transmitted electromagnetic waves is a representation of powers. The unit of the power is usually watt (W) or decibel-milliwatt (dBm). The decibel-milliwatt is a relative unit that indicates a ratio of the power to a reference power.

(8) Signal strength refers to strength of received radio signals. In wireless communication, the signal strength is usually used to describe strength degrees of signals received by a wireless device. A value of the signal strength directly affects receive quality and a transmission rate of the wireless device. Generally, the signal strength is represented in decibel-milliwatts (dBm), and a larger value indicates a stronger signal.

In embodiments of this application, a receive power and the signal strength of the received signal may be replaced with each other. The transmit power may also be referred to as a sending power, and the transmit power and signal strength of a transmitted (or sent) signal may be replaced with each other.

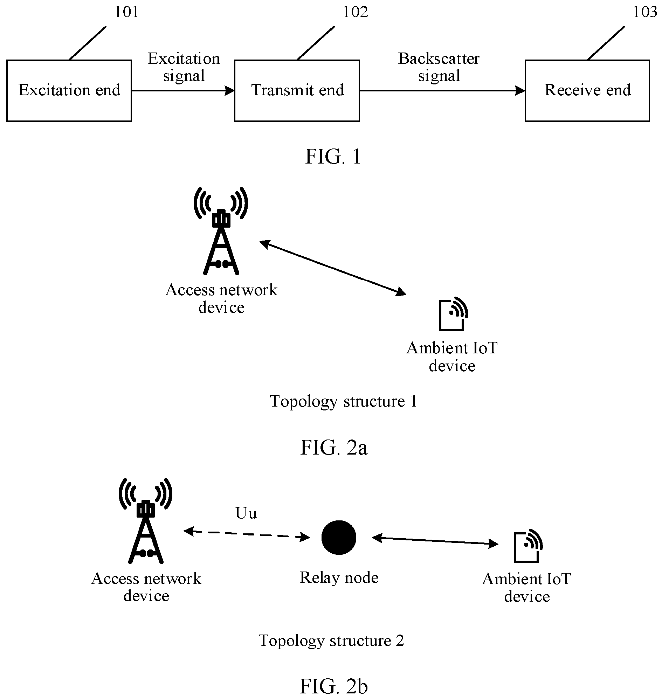

For ease of understanding embodiments of this application, a communication system shown in FIG. 1 is first used as an example to describe in detail the communication system to which the solutions in embodiments of this application are applicable. As shown in FIG. 1, the communication system may include an excitation end 101, a transmit end 102, and a receive end 103.

In the communication system, the excitation end 101 may send an excitation signal, where the excitation signal may be a single-tone signal (that is, a continuous sine wave) or a multi-tone signal (that is, a signal with a specific bandwidth). The excitation signal may be a radio frequency signal. The excitation signal may carry data sent to the receive end 103, or may not carry data sent to the receive end 103. The excitation signal sent by the excitation end 101 is a signal known to the transmit end 102.

After receiving the excitation signal, the transmit end 102 may modulate data that needs to be sent to the excitation signal, to obtain a backscatter signal, and send the backscatter signal to the receive end 103. In this embodiment of this application, the transmit end 102 may be a passive device, that is, no power supply is required in a process of receiving the excitation signal and sending the backscatter signal. Alternatively, the transmit end 102 may be a semi-active device, that is, a power supply is required in a process of receiving the excitation signal or sending the backscatter signal. In this embodiment of this application, the transmit end can perform energy storage. Specifically, charging may be performed based on an excitation signal, or charging may be performed based on another energy source such as light, and energy is stored. In this embodiment of this application, the transmit end may alternatively be incapable of energy storage.

In this embodiment of this application, the excitation end may be a device, or may be a unit, a module, a chip (system), or the like in the device. This is similar for the transmit end and the receive end. There may be a plurality of external forms of the excitation end, the transmit end, and the receive end. This is not specifically limited in embodiments of this application.

For ease of description, in the following embodiments of this application, the communication system shown in FIG. 1 is referred to as a backscatter communication system.

It should be noted that the excitation end 101 may also have another name, for example, an exciter (activator), a helper (helper), an interrogator (interrogator), a reader/writer (reader), or a terminal device. For ease of description, all the devices may be referred to as an excitation end in embodiments of this application. Correspondingly, the transmit end 102 may also have another name, for example, may be referred to as a reflection end, a reflector, a transmitter, a terminal device, a reflector device (backscatter device), a passive device (passive device), a semi-passive device, a semi-active device (semi-passive device), a backscatter signal device (ambient signal device), a passive (passive) device, an internet of things (internet of things, IoT) device, a passive Internet of Things (IoT) device, an ambient (ambient) device, or an ambient (ambient) IoT device. For ease of description, all the devices may be referred to as a transmit end in embodiments of this application. The receive end 103 may also have another name, for example, may be referred to as a receiver, a reader/writer, an access point, an access network device, a base station, or a terminal device. For ease of description, all the devices may be referred to as a receive end in embodiments of this application. In this application, passive may also be referred to as negative, and semi-active may also be referred to as semi-passive.

It should be noted that FIG. 1 is merely an example. In a possible implementation, the excitation end and the receive end may also be integrated into a same physical entity. Details are not described herein again.

The backscatter communication system shown in FIG. 1 and the method provided in embodiments of this application may be applied to an ambient IoT scenario. The following uses an example in which the backscatter communication system is applied to the ambient IoT scenario to describe in detail a communication system to which the solutions provided in embodiments of this application are applicable.

FIG. 2a is a schematic of a topology structure of a first communication system in an ambient IoT scenario according to an embodiment of this application. As shown in FIG. 2a, the communication system may include an access network device and an ambient IoT device. For ease of description, in the following embodiments of this application, the communication system shown in FIG. 2a is referred to as a topology structure 1. When the backscatter communication system is used in the topology structure 1, the ambient IoT device in the topology structure 1 may serve as a transmit end, the access network device in the topology structure 1 may serve as a receive end, and the access network device shown in the topology structure 1 or any other device, not shown in the topology structure 1, that can provide an excitation signal for the IoT device may serve as an excitation end.

FIG. 2b is a schematic of a topology structure of a second communication system in an ambient IoT scenario according to an embodiment of this application. As shown in FIG. 2b, the communication system may include an access network device, a relay node (intermediate node), and an ambient IoT device. The relay node may be a relay (relay), an integrated access backhaul (integrated access backhaul, IAB) node, a terminal device, a new terminal device, a repeater (repeater), a CPE, or the like. This is not specifically limited in embodiments of this application. The access network device and the relay node may communicate with each other through a Uu interface. For ease of description, in the following embodiments of this application, the communication system shown in FIG. 2b is referred to as a topology structure 2. When the backscatter communication system is used in the topology structure 2, the ambient IoT device in the topology structure 2 may serve as a transmit end, the relay node in the topology structure 2 may serve as a receive end, and any device other than the ambient IoT device in the topology structure 2 or any other device, not shown in the topology structure 2, that can provide an excitation signal for the IoT device may serve as an excitation end. For example, the relay node itself serve as an excitation end. In this application, a relay node is used as an example, and the relay node may be replaced with a terminal device.

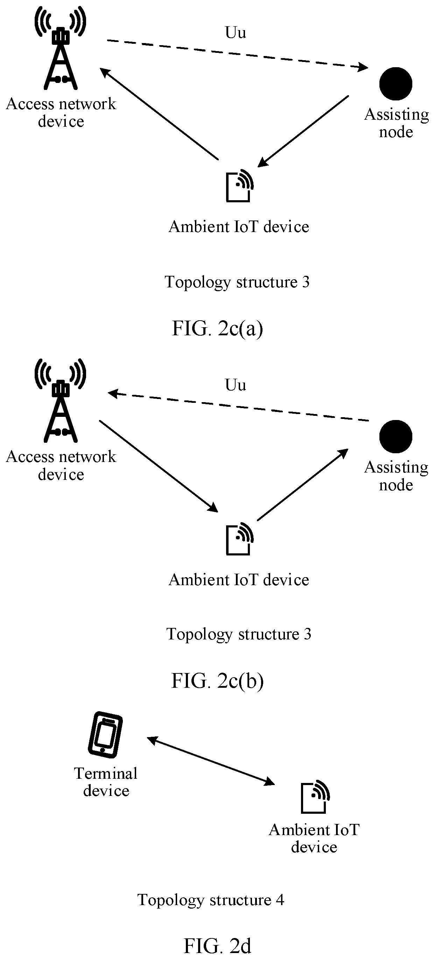

FIG. 2c is a schematic of a topology structure of a third communication system in an ambient IoT scenario according to an embodiment of this application. As shown in FIG. 2c(a) or FIG. 2c(b), the communication system may include an access network device, an assisting node (assisting node), and an ambient IoT device. FIG. 2c(a) shows an uplink communication scenario, and FIG. 2c(b) shows a downlink communication scenario. The access network device and the assisting node may communicate with each other through a Uu interface. For ease of description, in the following embodiments of this application, the communication system shown in FIG. 2c(a) and the communication system shown in FIG. 2c(b) are collectively referred to as a topology structure 3. When the backscatter communication system is used in the topology structure 3, the ambient IoT device in the topology structure 3 may serve as a transmit end, the access network device in the topology structure 3 may serve as a receive end, and any device other than the ambient IoT device in the topology structure 3 or any other device, not shown in the topology structure 3, that can provide an excitation signal for the IoT device may serve as an excitation end.

FIG. 2d is a schematic of a topology structure of a fourth communication system in an ambient IoT scenario according to an embodiment of this application. As shown in FIG. 2d, the communication system may include a terminal device and an ambient IoT device. For ease of description, in the following embodiments of this application, the communication system shown in FIG. 2d is referred to as a topology structure 4. When the backscatter communication system is used in the topology structure 4, the ambient IoT device in the topology structure 4 may serve as a transmit end, the terminal device in the topology structure 4 may serve as a receive end, and any device other than the ambient IoT device in the topology structure 4 or any other device, not shown in the topology structure 4, that can provide an excitation signal for the IoT device may serve as an excitation end.

In the topology structure 1 to the topology structure 4, a direction of a link in each topology structure may be unidirectional or bidirectional. This is not specifically limited in embodiments of this application.

In the topology structure 1 to the topology structure 4, there may be one or more nodes (or devices) in each topology structure. In FIG. 2a to FIG. 2d, only an example in which there is one node of each type in a corresponding topology structure is used for illustration, and a quantity of nodes in the topology structure is not limited.

Depending on a storage capability, the ambient IoT devices shown in the topology structure 1 to the topology structure 4 may be classified into the following three types:
First-type device: a device that can or cannot perform energy storage (or storage) and does not have an independent signal generation function. When performing backscatter (backscatter) transmission (transmission), this type of device does not have an independent signal generation/amplification function. This type of device may also be referred to as a device A (Device A).
Second-type device: a device that can perform energy storage and does not have an independent signal generation function. When performing backscatter transmission, this type of device does not have an independent signal generation function, but can amplify backscatter signals. Specifically, the backscatter signal may be amplified by using the stored energy. This type of device may also be referred to as a device B (Device B).

In this application, amplification may be understood as power amplification. To be specific, power amplification may be performed on strength of a to-be-sent signal, or power amplification may be performed on strength of a detected signal.

Third-type device: a device that can perform energy storage and has an independent signal generation function. This type of device may generate an active (active) radio frequency (radio frequency, RF) signal for data transmission. This type of device may also be referred to as a device C (Device C).

For ease of description, the ambient IoT device is referred to as an IoT device for short in the following embodiments of this application.

In the topology structure 1 to the topology structure 4, common application background of the IoT device is that a signal sent by the IoT device needs to be detected by the receive end (for example, a reader). Considering that a power is limited, especially that neither the first-type device nor the second-type device has an independent signal generation function, the IoT device needs a source that can provide an excitation signal (for example, a carrier wave (carrier wave) signal) to provide a carrier for the IoT device to carry a to-be-sent signal of the IoT device. In any one among the topology structure 1 to the topology structure 4, a node may provide an excitation signal for the IoT device, and the node may be referred to as an excitation source (activator) or an excitation end. The excitation source may be located in the topology structure or not located in the topology structure. The excitation source may be integrated with the receive end, or may not be integrated with the receive end. When the excitation source and the receive end are integrated, the excitation source and the receive end may be a same node or from a same node. When the excitation source and the receive end are not integrated, the excitation source and the receive end may not be a same node or may be from different nodes.

It should be noted that, in embodiments of this application, excitation (Activator), activation, trigger (Trigger), and waveform (Waveform) may be used interchangeably. The excitation source, activation source, trigger source, and waveform can be considered as a same source.

The access network device, the relay node, the assisting node, and the like shown in the topology structure 1 to the topology structure 4 may be devices in communication systems of various standards. The communication system may be, for example, a communication system such as a new radio (new radio, NR) system, a long term evolution (long term evolution, LTE) system, an advanced long term evolution (advanced long term evolution, LTE-A) system, a universal mobile telecommunications system (universal mobile telecommunications system, UMTS), an evolved long term evolution (evolved long term evolution, eLTE) system, a 6th generation (6th Generation, 6G) communication system, or a future communication system, or may be a communication system in a scenario such as vehicle to everything (vehicle to X, V2X), long term evolution-vehicle (LTE-V), vehicle to vehicle (vehicle to vehicle, V2V), Internet of Vehicles, machine type communication (Machine Type communication, MTC), Internet of Things (internet of things, IoT), long term evolution-machine to machine (LTE-machine to machine, LTE-M), or machine to machine (machine to machine, M2M) is not specifically limited in this embodiment of this application.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

It should be noted that the term "and/or" in this application describes an association relationship between associated objects and represents that three relationships may exist. For example, A and/or B may represent the following three cases: Only A exists, both A and B exist, and only B exists. The character "/" generally indicates an "or" relationship between the associated objects. "A plurality of" in this application means two or more. "At least one" means one or more. "At least one of the following" or a similar expression thereof represents any combination of the listed items. For example, at least one of A, B, and (or) C may represent the following cases: Only A exists, only B exists, only C exists, both A and B exist, both B and C exist, both A and C exist, and both A, B, and C exist. A, B, and C may be singular or plural. In addition, it should be understood that in description of this application, terms such as "first" and "second" are merely used for distinguishing and description, but should not be understood as indicating or implying relative importance, or should not be understood as indicating or implying a sequence.

Embodiments of this application provide a communication method and a communication device. The method may be applied to various backscatter communication scenarios, and may be applied to communication systems of various standards. Based on the solutions provided in this embodiment of this application, a transmit end in a backscatter communication scenario can accurately determine, with reference to a specific scenario (for example, a capability of the transmit end, a backscatter communication requirement, a path loss of backscatter communication, and a path loss requirement of backscatter communication), whether to perform backscatter communication (that is, whether to send a backscatter signal). This reduces or avoids unnecessary backscatter communication, thereby reducing a case in which backscatter communication fails, increasing a success rate of backscatter communication, and improving backscatter communication efficiency. Unnecessary backscatter communication is reduced or avoided, so that the transmit end can be prevented from ineffectively consuming energy to perform unnecessary backscatter communication, and system interference caused by unnecessary backscatter communication can be reduced or avoided, thereby improving overall communication efficiency.

In this application, determining whether to perform backscatter communication may also be understood as determining to perform backscatter communication or determining to send a backscatter signal.

The solutions provided in embodiments of this application are described in detail below with reference to specific embodiments. It should be understood that the following provides descriptions by using an example in which a first device and a second device are execution entities. However, components (for example, processors, chips, or chip systems) in the first device and the second device may alternatively be execution entities. When steps such as receiving, detection, and sending are performed by components in the first device and the second device, it may be understood that the steps are indirectly performed by another device, or may be understood that the steps are performed through an interface or the like, for communication with another device, for example, communication between a chip and a radio frequency transceiver.

### Embodiment 1

In some embodiments of this application, a transmit end in a backscatter communication scenario may determine, by comparing a power that can be used by the transmit end for backscatter communication with a power required for performing backscatter communication, whether the transmit end supports completion of successful backscatter communication once. When determining that the transmit end supports completion of successful backscatter communication once, the transmit end may determine to perform corresponding backscatter communication; or when determining that the transmit end does not support completion of successful backscatter communication once, the transmit end may determine not to perform corresponding backscatter communication. According to the method, necessity and a success rate of performing backscatter communication by the transmit end can be ensured, and unnecessary interference on a channel can be alleviated.

In this application, determining whether the transmit end supports completion of successful backscatter communication once may also be understood as determining that the transmit end supports completion of successful backscatter communication once.

A method provided in this embodiment may be applied to a scenario in which a receive end and an excitation end in a backscatter communication system are co-sited.

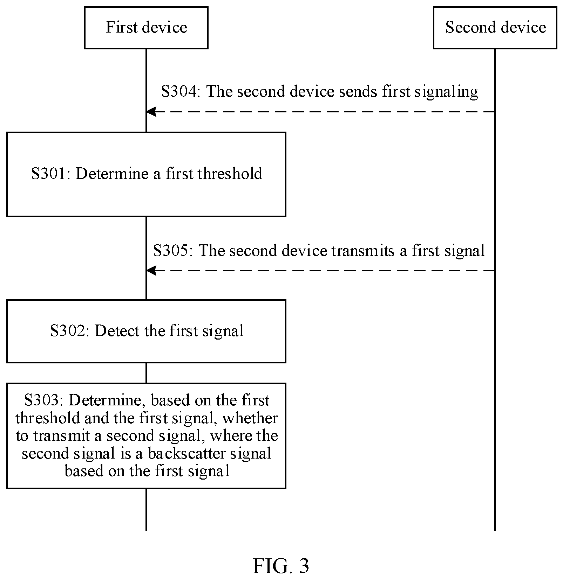

As shown in FIG. 3, a communication method provided in this embodiment may include the following steps.

S301: A first device determines a first threshold.

It should be noted that the threshold in embodiments of this application may also be replaced with a threshold value. For example, the first threshold may also be referred to as a first threshold value.

Optionally, that the first device determines the first threshold may be: The first device receives first signaling, where the first signaling indicates the first threshold.

Optionally, the first threshold may alternatively be predefined.

The predefinition in this application may also be replaced with pre-defining.

In this application, predefinition or pre-defining may be understood as preconfiguration, or presetting at delivery.

In this embodiment, the first device may serve as a transmit end in a backscatter communication system. For example, the first device may be the IoT device shown in the foregoing topology structures 1 to 4.

In this embodiment, the first threshold may be used by the first device to determine whether to send a backscatter signal, that is, a second signal described below. It may also be understood as that the first threshold may be used by the first device to determine whether to perform backscatter transmission. Specifically, the first threshold may be used as a power required by the first device to perform backscatter transmission, or may be used as a lower bound of the power required by the first device to perform backscatter transmission. In this application, the power may also be understood as signal strength. In other words, the first threshold may be used as signal strength required by the first device to perform backscatter transmission, or may be used as a lower bound of the signal strength required by the first device to perform backscatter transmission.

It should be noted that performing backscatter transmission in embodiments of this application may also be referred to as performing backscatter communication or performing backscattering transmission.

Optionally, the first signaling received by the first device may be sent by a second device. The second device may serve as a receive end in the backscatter communication system.

For example, the first signaling in embodiments of this application may be select (select) signaling (or paging (paging)-like signaling) or query (query) signaling. The query signaling may also be understood as enquiry signaling.

S302: The first device detects a first signal.

It should be noted that the first signal in embodiments of this application belongs to an excitation signal, or the first signal may also be referred to as an excitation signal. The detection signal in embodiments of this application may also be understood as a received signal, and the transmission signal in embodiments of this application may also be understood as a sending signal.

In this embodiment, the first signal may be a signal on a first path, and the first path may be a communication path between the first device and the second device. In other words, the first signal detected by the first device may be a signal from the second device. The second device may be an excitation end in the backscatter communication system.

It should be noted that step S302 and step S301 may be performed in any sequence. For example, step S301 may be performed before step S302, or may be performed simultaneously with step S302, or may be performed after step S302. This is not specifically limited in this embodiment.

S303: The first device determines, based on the first threshold and the first signal, whether to transmit the second signal. The second signal is a backscatter signal based on the first signal.

Determining whether to transmit the second signal may also be understood as determining whether a sending condition of the second signal is met. When determining, based on the first threshold and the first signal, that the sending condition of the second signal is met, the first device may determine to transmit the second signal. When determining, based on the first threshold and the first signal, that the sending condition of the second signal is not met, the first device may determine not to transmit the second signal.

It should be noted that the determining whether to transmit the second signal in embodiments of this application may also be understood as: determining whether to perform backscatter transmission. The backscatter signal described in embodiments of this application may also be referred to as a backscattered signal, a transmission signal using an excitation signal, or the like.

In this embodiment, the second signal belongs to a backscatter signal, or the second signal may also be referred to as a backscatter signal.

In this embodiment, transmitting the second signal may specifically include: transmitting the second signal on the first path.

In this embodiment, the receive end and the excitation end may be co-sited. To be specific, both the receive end and the excitation end are second devices, and the first signal and the second signal are signals on a same path (namely, the first path). For example, the second device may be the device, shown in the foregoing topology structures 1 to 4, that may serve as both the receive end and the excitation end, for example, the access network device, the relay node, the assisting node, or the terminal device.

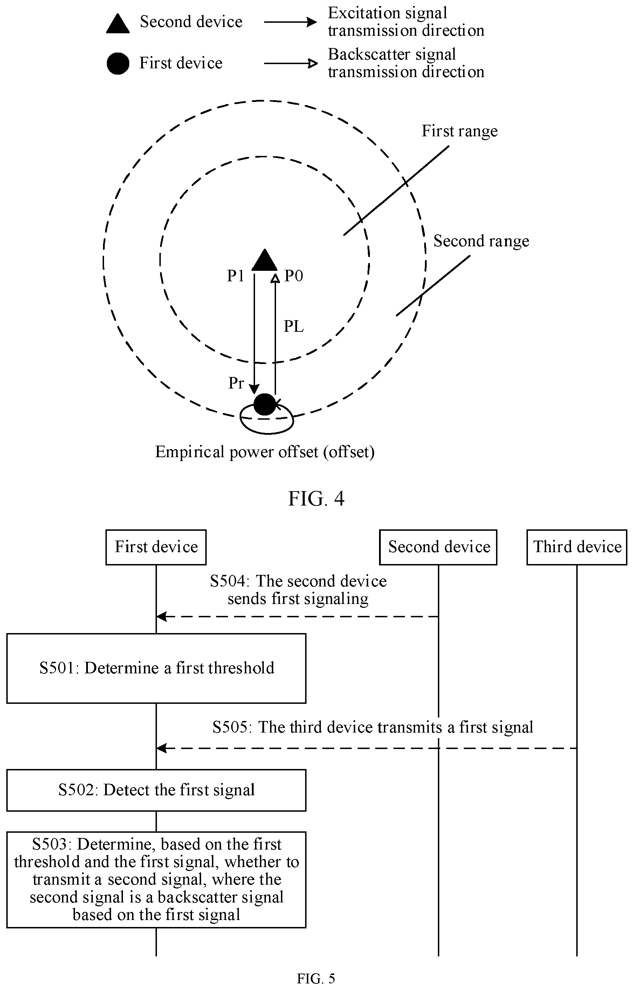

Example 1: In an example, in a possible scenario, a scenario in which the excitation end and the receive end in the backscatter communication scenario are co-sited is used as an example. The first device may be an IoT device shown in FIG. 4, and the second device may be an access network device shown in FIG. 4. The IoT device may serve as a transmit end, and the access network device may serve as both a receive end and an excitation end. In this scenario, the first signal may be an excitation signal transmitted by the access network device and detected by the IoT device, and the second signal may be a backscatter signal transmitted by the IoT device (to the access network device).

In another example, in a possible scenario, a scenario in which the excitation end and the receive end in the backscatter communication scenario are co-sited is used as an example. The first device may be the IoT device shown in the topology structure 2, and the second device may be the terminal device. The IoT device may serve as a transmit end, and the terminal device may serve as both a receive end and an excitation end. In this scenario, the first signal may be an excitation signal transmitted by the terminal device and detected by the IoT device, and the second signal may be a backscatter signal transmitted by the IoT device (to the terminal device).

In this embodiment, after obtaining the first threshold and detecting the first signal, the first device may determine, based on the first threshold and the first signal, whether to transmit the second signal. Specifically, a manner in which the first device determines, based on the first threshold and the first signal, whether to transmit the second signal may include at least one of the following:
Manner 1: When a sum of signal strength of the first signal detected by the first device and a half of a power parameter of the first device is greater than or equal to the first threshold, the first device determines to transmit the second signal. To be specific, the signal strength of the first signal detected by the first device is denoted as Pr, the power parameter of the first device is denoted as Ps, and the first threshold is denoted as P. When Pr+Ps/2≥P is satisfied, the first device determines to transmit the second signal.
Manner 2: When signal strength of the first signal detected by the first device is greater than or equal to the first threshold, the first device determines to transmit the second signal. To be specific, the signal strength of the first signal detected by the first device is denoted as Pr, and the first threshold is denoted as P. When Pr≥P is satisfied, the first device determines to transmit the second signal.
Manner 3: When a sum of signal strength of the first signal detected by the first device and a half of a power parameter of the first device is less than the first threshold, the first device determines not to transmit the second signal. To be specific, the signal strength of the first signal detected by the first device is denoted as Pr, the power parameter of the first device is denoted as Ps, and the first threshold is denoted as P. When Pr+Ps/2<P is satisfied, the first device determines not to transmit the second signal.
Manner 4: When signal strength of the first signal detected by the first device is less than the first threshold, the first device determines not to transmit the second signal. To be specific, the signal strength of the first signal detected by the first device is denoted as Pr, and the first threshold is denoted as P. When Pr<P is satisfied, the first device determines not to transmit the second signal.
Manner 5: When a sum of signal strength of the first signal detected by the first device, a product of a power amplification parameter of the first device and a sum of the signal strength and a power loss parameter of the first device, and a first specified value is greater than or equal to the first threshold, the first device determines to transmit the second signal. To be specific, the signal strength of the first signal detected by the first device is denoted as Pr, the power loss parameter of the first device is denoted as offset, the power amplification parameter of the first device is denoted as Pa, the first specified value is denoted as b, and the first threshold is denoted as P. When Pr+(Pr+offset)×Pa+b≥P is satisfied, the first device determines to transmit the second signal. Alternatively, when a sum of signal strength of the first signal detected by the first device and a product of a power amplification parameter of the first device and a sum of the signal strength and a power loss parameter of the first device is greater than or equal to the first threshold, the first device determines to transmit the second signal. To be specific, the signal strength of the first signal detected by the first device is denoted as Pr, the power loss parameter of the first device is denoted as offset, the power amplification parameter of the first device is denoted as Pa, and the first threshold is denoted as P. When Pr+(Pr+offset)×Pa≥P is satisfied, the first device determines to transmit the second signal.
Manner 6: When a sum of signal strength of the first signal detected by the first device, a product of a power amplification parameter of the first device and a sum of the signal strength of the first signal and a power loss parameter of the first device, and a first specified value is less than the first threshold, the first device determines not to transmit the second signal. To be specific, the signal strength of the first signal detected by the first device is denoted as Pr, the power loss parameter of the first device is denoted as offset, the power amplification parameter of the first device is denoted as Pa, the first specified value is denoted as b, and the first threshold is denoted as P. When Pr+(Pr+offset)×Pa+b<P is satisfied, the first device determines not to transmit the second signal. Alternatively, when a sum of signal strength of the first signal detected by the first device and a product of a power amplification parameter of the first device and a sum of the signal strength and a power loss parameter of the first device is less than the first threshold, the first device determines not to transmit the second signal. To be specific, the signal strength of the first signal detected by the first device is denoted as Pr, the power loss parameter of the first device is denoted as offset, the power amplification parameter of the first device is denoted as Pa, and the first threshold is denoted as P. When Pr+(Pr+offset)×Pa<P is satisfied, the first device determines not to transmit the second signal.

It should be understood that in embodiments of this application, "greater than or equal to" and "greater than" are interchangeable, and "less than or equal to" and "less than" are also interchangeable.

That the first device determines, based on the first threshold and the first signal, whether to transmit the second signal may be understood as at least one of the following:
When the sum of the signal strength of the first signal detected by the first device and the half of the power parameter of the first device is greater than or equal to the first threshold, the first device determines to transmit the second signal.

When the signal strength of the first signal detected by the first device is greater than or equal to the first threshold, the first device determines to transmit the second signal.

When the sum of the signal strength of the first signal detected by the first device and the half of the power parameter of the first device is less than the first threshold, the first device determines not to transmit the second signal.

When the signal strength of the first signal detected by the first device is less than the first threshold, the first device determines not to transmit the second signal.

When the sum of the signal strength of the first signal detected by the first device, the product of the power amplification parameter of the first device and the sum of the signal strength and the power loss parameter of the first device, and the first specified value is greater than or equal to the first threshold, the first device determines to transmit the second signal.

When the sum of the signal strength of the first signal detected by the first device and the product of the power amplification parameter of the first device and the sum of the signal strength and the power loss parameter of the first device is greater than or equal to the first threshold, the first device determines to transmit the second signal.

When the sum of the signal strength of the first signal detected by the first device, the product of the power amplification parameter of the first device and the sum of the signal strength and the power loss parameter of the first device, and the first specified value is less than the first threshold, the first device determines not to transmit the second signal.

When the sum of the signal strength of the first signal detected by the first device and the product of the power amplification parameter of the first device and the sum of the signal strength and the power loss parameter of the first device is less than the first threshold, the first device determines not to transmit the second signal.

The power parameter in embodiments of this application may include the power amplification parameter and/or the power loss parameter.

The power amplification parameter indicates energy stored in the device or a power that can be provided by a power amplifier of the device for performing backscatter transmission. Alternatively, the power amplification parameter indicates energy stored in the device or a degree to which a power amplifier of the device can amplify a power (or signal strength). The amplification degree may be represented by an amplification multiple, or may be represented by another linear or non-linear transformation formula. In Manner 1 and/or Manner 3, the power amplification parameter included in the power parameter may indicate energy stored in the device or a power that can be provided by a power amplifier of the device for performing backscatter transmission. In Manner 5 and/or Manner 6, the power amplification parameter may indicate energy stored in the device or a degree to which a power amplifier of the device can amplify a power (or signal strength).

The power loss parameter may indicate an offset (or a loss) from detection of the device to reflection of the device. The offset (or the loss) from detection to reflection may be understood as a loss in a process from detection of an excitation signal (for example, the second signal) to transmission of a backscatter signal (for example, the first signal) based on the excitation signal, may be understood as a loss caused by backscattering and any factor that causes power attenuation, or may be understood as an internal power loss of the device during backscatter communication. In embodiments of this application, the power loss parameter may also be referred to as a backscattering loss (backscattering loss). Specifically, the loss may be a reflection (reflection) loss and/or a frequency shift loss.

Optionally, when the first device belongs to the foregoing first-type device, the power parameter of the first device may include the power loss parameter of the first device. When the first device belongs to the foregoing second-type device, the power parameter of the first device may include the power amplification parameter and/or the power loss parameter of the first device.

In the foregoing manners, the power loss parameter of the first device is 0 or a negative value (or a negative number). When the power loss parameter of the first device is a positive value (or a positive number), the sum of the signal strength of the first signal detected by the first device and the power parameter of the first device may be replaced with a difference between a first value and a second value, where the first value may be the signal strength of the first signal detected by the first device, or may be a sum of the signal strength of the first signal detected by the first device and the power amplification parameter of the first device; and the second value may be the power loss parameter of the first device.

In this embodiment, when determining not to transmit the second signal, the first device may perform energy storage. Specifically, the first device may perform energy storage based on the first signal. In this application, "according to" may also be understood as "based on".

In the foregoing manners, the signal strength of the first signal detected by the first device, or the sum of the signal strength of the first signal detected by the first device and the power parameter of the first device may be used as a power that can be provided by the first device for performing backscatter transmission. The first threshold may be used as a power required by the first device to perform backscatter transmission, or may be used as a lower bound of the power required by the first device to perform backscatter transmission. Therefore, based on the foregoing manner, the first device may determine, through comparison, whether the power that can be provided by the first device for performing backscatter transmission satisfies a corresponding trigger threshold, namely, the first threshold, to determine whether the power provided by the first device is sufficient for backscatter transmission. The first device may send the second signal when determining that the power provided by the first device is sufficient for backscatter transmission, and may not send the second signal when determining that the power provided by the first device is insufficient for backscatter transmission. According to the method, the first device can ensure that the receive end can receive the corresponding second signal during backscatter transmission. Therefore, according to the method, necessity and a success rate of performing backscatter communication can be ensured, and unnecessary interference on a channel can be alleviated, thereby improving communication efficiency.

Optionally, in this embodiment, before step S301, the method may further include the following step S304:

S304: The second device sends the first signaling.

The first signaling in embodiments of this application may be radio resource control (radio resource control, RRC) signaling, may be medium access control (medium access control, MAC) signaling, or may be signaling of another type. This is not specifically limited in this application.

In a possible solution, the first signaling may include the first threshold. The first threshold may be used as a trigger threshold for determining whether to perform backscatter communication. The first threshold is a power value or a signal strength value. The first threshold may be used as a power or signal strength required by the first device to perform backscatter transmission, or may be used as a lower bound of the power or signal strength required by the first device to perform backscatter transmission. As described in the foregoing method, the first device may determine, based on the first threshold and the power that can be provided by the first device for performing backscatter communication, whether to perform backscatter transmission.

Optionally, in this solution, that the second device sends the first signaling may specifically include: The second device sends the first signaling to the first device.

The following describes in detail a method for determining the first threshold (for details, refer to Method 1 to Method 4 below).

For ease of description, in this embodiment, the first threshold is denoted as P, a target power at which the second device detects the second signal is denoted as P0, a power at which the second device transmits the first signal is denoted as P1, the power parameter of the first device is denoted as Ps, the power amplification parameter of the first device is denoted as Pa, the power loss parameter of the first device is denoted as offset, signal strength of an excitation signal received by the first device is denoted as Pr, the power that can be provided by the first device for performing backscatter communication is denoted as P2, and a loss of a signal on a transmission path (namely, the first path) between the second device and the first device is denoted as PL.

Method 1: In some embodiments of this application, the power amplification parameter of the first device may indicate energy stored by the first device or a power that can be provided by a power amplifier of the device for performing backscatter transmission. In this scenario, the first threshold is related to the power at which the second device transmits the first signal, the target power at which the second device detects the second signal, and the power parameter of the first device. The second device may determine the first threshold based on the three parameters. Specifically, the second device may use, as the first threshold, a half of a value obtained by subtracting the power parameter of the first device from a sum of the power at which the second device transmits the first signal and a power at which the second device expects to detect the second signal, that is, P=(P1+P0-Ps)/2.

It should be noted that the target power for detecting the second signal in embodiments of this application may also be understood as: a power of the second signal expected to be received, signal strength of the second signal expected to be detected, a target detection power or a target receive power of the second signal, a detection threshold of the second signal, detection sensitivity of the second signal, or the like. In embodiments of this application, the power may be interchanged with the signal strength; the power value may be interchanged with the signal strength value; detection may be interchanged with receiving or monitoring; and "expect" may be interchanged with "expected". The power for transmitting the first signal in embodiments of this application may also be understood as a transmit power of the first signal, or signal strength of the transmitted (or sent) first signal. In embodiments of this application, the power amplifier is a signal amplifier or an amplifier. Specifically, strength of a received signal may be amplified, or strength of a to-be-transmitted signal may be amplified. Amplification by the power amplifier may be superposition amplification, may be multiple amplification, or may be amplification according to a linear or non-linear formula. In Method 1, superposition amplification is used as an example. In the following Method 2, multiple amplification or non-linear amplification is used as an example.

In the method, in an optional implementation, the second device may determine the power parameter of the first device. For example, the second device may use a first specified parameter or an empirical power parameter (that is, a power parameter determined based on experience) as the power parameter of the first device. In another optional implementation, the second device may receive signaling from the first device, to obtain the power parameter of the first device indicated by the signaling. For example, when the power parameter of the first device includes the power loss parameter of the first device, the first device may send third signaling before receiving the first signaling, where the third signaling may indicate the power loss parameter of the first device. The second device may receive the third signaling, to determine the power loss parameter, of the first device, indicated by the third signaling.

In the method, in an optional implementation, Ps=offset, and the second device may determine the first threshold according to the following formula: P=(P1+P0-offset)/2. In this manner, when the first device belongs to the foregoing first-type device, the first device may determine, in Manner 2 and/or Manner 4, whether to transmit the second signal; or when the first device belongs to the foregoing second-type device, the first device may determine, in Manner 1 and/or Manner 3, whether to transmit the second signal. The power parameter of the first device in Manner 1 and/or Manner 3 includes the power amplification parameter of the first device. In another optional implementation, Ps=Pa+offset, and the second device may determine the first threshold according to the following formula: P=(P1+P0-offset-Pa)/2. According to the method, the first device may determine, in Manner 2 and/or Manner 4, whether to transmit the second signal.

It should be noted that the power loss parameter in the foregoing method is 0 or a negative value (or a negative number). When a value of the power loss is a positive value (or a positive number), "+offset" in the foregoing method may be replaced with "-offset".

Example 2: In an example, according to the method provided in this embodiment, in any possible scenario described in Example 1, P0 represents a target power at which the second device detects a backscatter signal, P1 represents a power at which the second device transmits an excitation signal, and offset represents an empirical power offset of the first device. The empirical power offset of the first device is an empirical power offset value of receiving and reflecting the excitation signal by the first device. Pa represents a power that can be used by the first device to perform backscatter transmission or a power provided by the power amplifier of the first device. Specifically, the first device may perform power amplification by using stored energy, to provide the power Pa.

In the first possible scenario described in Example 1, the second device may be an access network device, and the first device may be an IoT device. In the second possible scenario described in Example 1, the second device may be a terminal device, and the first device may be an IoT device.

In Example 2, when the empirical power offset offset of the first device is 0 or a negative value, the trigger threshold P may satisfy the following formula: P=(P1+P0+offset)/2; or when the empirical power offset offset of the first device is 0 or a positive value, the trigger threshold P may satisfy the following formula: P=(P1+P0-offset)/2. In conclusion, the trigger threshold P may satisfy the following formula: P=(P1+P0-|offset|)/2, where |offset| represents an absolute value of offset.

For example, offset is 0 or a positive value. In a scenario shown in FIG. 4, signal transmission paths between the second device and the first device are the same. Therefore, it may be considered that a loss of a backscatter signal sent by the first device on the transmission path (namely, the first path) is the same as a loss of an excitation signal sent by the second device on the transmission path. A loss generated in a process in which the excitation signal sent by the second device is transmitted to the first device, converted into a backscatter signal in the first device, and then returned to the second device includes: a loss of the excitation signal on the transmission path (namely, the first path), a loss of the backscatter signal on the transmission path, and a loss in the first device. The loss PL of the signal on the transmission path is (P1+offset-P0)/2. Therefore, it may be determined that, to ensure that the second device detects the backscatter signal based on the target power (namely, P0), the power at which the first device transmits the backscatter signal is at least P0+PL= (P1+P0+offset)/2. Therefore, it may be determined that the trigger threshold P=(P1+P0+offset)/2.

In Example 2, in a possible case, when the first device belongs to the foregoing first-type device (namely, the device A), after detecting the excitation signal from the second device, the first device may use signal strength of the detected excitation signal as a power used by the first device to perform backscatter transmission (that is, the power that can be provided by the first device for performing backscatter communication). In this scenario, P2=Pr. In another possible case, when the first device belongs to the foregoing second-type device (namely, the device B), after detecting the excitation signal from the second device, the first device may use a sum of signal strength of the detected excitation signal and a power that can be amplified by the power amplifier as a power used by the first device to perform backscatter transmission. Specifically, power amplification may be performed by using energy, stored by the first device, that can be used for backscattering transmission. In this scenario, P2=Pr+Pa. The energy, stored by the first device, that can be used for backscattering transmission may include energy stored by the first device based on another previously received excitation signal.

Optionally, when the first device belongs to the foregoing second-type device, the first device may include a power amplifier. The power amplifier may be configured to amplify the backscatter signal by using the energy, stored by the first device, that can be used for backscattering transmission. The power corresponding to the energy, stored in the first device and that can be used for backscatter transmission may also be understood as a power that can be added to the backscatter signal in a process in which the power amplifier in the first device amplifies the backscatter signal.

In Example 2, when the first device belongs to the foregoing first-type device, after detecting the excitation signal from the second device and determining P2 and P according to the foregoing method, if determining that P2 (namely, Pr) is greater than or equal to P, the first device determines to perform backscatter transmission; or if determining that P2 (namely, Pr) is less than P, the first device determines not to perform backscatter transmission. When determining to perform backscatter transmission, the first device may modulate to-be-sent information to the excitation signal, to obtain a backscatter signal, and transmit the backscatter signal.

In Example 2, when the first device belongs to the foregoing second-type device, in a possible solution, after detecting the excitation signal from the second device and determining P2 and P according to the foregoing method, if determining that P2 (namely, Pr+Pa) is greater than or equal to P, the first device determines to perform backscatter transmission; or if determining that P2 (namely, Pr+Pa) is less than P, the first device determines not to perform backscatter transmission. When determining to perform backscatter transmission, the first device may modulate to-be-sent information to the excitation signal, to obtain a backscatter signal, and transmit the backscatter signal. In this process, the first device may use the stored energy, or may not use the stored energy. For example, when Pr is greater than or equal to P, the first device may not use the stored energy. When Pr is less than P, the first device needs to use the stored energy. In this scenario, the stored energy that needs to be used by the first device meets the following condition: A power that can be provided needs to be greater than or equal to P-Pr. When determining not to perform backscatter transmission, the first device may convert the received excitation signal into energy for storage. The energy stored by the first device in this manner may be used for next backscatter communication.

In Example 2, when the first device belongs to the foregoing second-type device, in another possible solution, after detecting the excitation signal from the second device, the first device may first compare Pr with P. If determining that Pr is greater than or equal to P, the first device determines to perform backscatter transmission. When determining to perform backscatter transmission, the first device may modulate to-be-sent information to the excitation signal, to obtain a backscatter signal, and transmit the backscatter signal. If determining that Pr is less than P, the first device may further compare Pr+Pa with P. When comparing Pr+Pa with P, if determining that Pr+Pa is greater than or equal to P, the first device determines to perform backscatter transmission. When determining to perform backscatter transmission, the first device may modulate to-be-sent information to the excitation signal by using the stored energy (that is, a power corresponding to Pa), to obtain a backscatter signal, and transmit the backscatter signal. If determining that Pr+Pa is less than P, the first device determines not to perform backscatter transmission. When determining not to perform backscatter transmission, the first device may convert the received excitation signal into energy for storage. The energy stored by the first device in this manner may be used for next backscatter communication.

According to the foregoing method, in the scenario shown in FIG. 4, the first device within a first range may be a first device meeting the condition that Pr is greater than or equal to P. The first device within the first range may directly perform backscattering transmission based on the received excitation signal. The first device outside the first range needs to use additional energy to implement backscatter transmission. For example, the first device within a second range may be a first device meeting the condition that Pr+Pa is greater than or equal to P. The first device within the second range needs to use the stored energy to implement backscatter communication.

In Example 2, the excitation signal is obtained in a first direction (namely, a transmission direction of the excitation signal shown in FIG. 4) of the same path (namely, the first path) between the second device and the first device, when the backscatter signal is sent in a second direction (namely, a transmission direction of the backscatter signal shown in FIG. 4) of the path, the first device determines whether the provided power (namely, P2) used for sending the backscatter signal meets a requirement for a power (namely, P) of a signal expected to be sent after the backscatter transmission loss. This can ensure that the backscatter signal can be successfully and accurately detected (that is, received) by the second device as long as the first device transmits the backscatter signal. Therefore, according to the method, necessity and a success rate of performing backscatter communication can be ensured, and unnecessary interference on a channel can be alleviated, thereby improving communication efficiency.

Method 2: In some embodiments of this application, the power amplification parameter of the first device may indicate a degree to which the first device can amplify a power (which may also be replaced with signal strength in the method). The first device may amplify the power by using stored energy.

In this scenario, the power amplification parameter Pa may be used as an amplification multiple. When the device performs linear amplification on the power, a power obtained through amplification may be a product of the power before amplification and Pa. That is, the power obtained through amplification and the power before amplification satisfy the following formula: P_{A}=Pa×P_{B}. P_{A} represents the power obtained through amplification, and P_{B} represents the power before amplification. When the device performs non-linear amplification on the power (or the signal strength), in an optional implementation, a power obtained through amplification may be a product of the power before amplification and Pa, plus a first specified value b. That is, the power obtained through amplification and the power before amplification satisfy the following formula: P_{A}=Pa×P_{B}+b. P_{A} represents the power obtained through amplification, P_{B} represents the power before amplification, and b represents the first specified value, where b is a positive value. In this manner, Pa may be used to represent a linear amplification part in non-linear amplification, and b may be used to represent a non-linear amplification part in non-linear amplification. When a rule for the device to perform non-linear amplification on the power is another formula, a relationship between P_{A} and P_{B} may be determined in a similar manner.

In this scenario, the first threshold is related to the power at which the second device transmits the first signal, the target power at which the second device detects the second signal, and the power parameter of the first device. The second device may determine the first threshold based on the three parameters.

Specifically, when the power parameter of the first device includes the power amplification parameter and the power loss parameter, the second device may use a ratio of a first value to a second value as the first threshold. The first value is a difference between a sum of the power at which the second device transmits the first signal and the target power at which the second device detects the second signal, a third value, and the first specified value. The third value is a product of the power loss parameter of the first device and the power amplification parameter of the first device. The second value is a sum of the power parameter of the first device and 1. That is, P=(P1+P0-offset×Pa-b)/(1+Pa). A value of b may be 0 or a positive value. Specifically, when the amplification performed by the first device on the power is linear amplification, the value of b is 0. In this scenario, P=(P1+P0-offset×Pa)/(1+Pa); or when the amplification performed by the first device on the power is non-linear amplification, the value of b is a positive value. In this scenario, P=(P1+P0-offset×Pa-b)/(1+Pa).

In Method 2, PL=P1-Pr, and P2=(Pr+offset)×Pa+b. To ensure that the second device detects the backscatter signal based on at least P0, it needs to be ensured that P2-PL is greater than or equal to P0, that is, (Pr+offset)×Pa+b-(P1-Pr)≥P0. Therefore, it can be deduced that Pr≥(P1+P0-offset×Pa-b)/(1+Pa), to determine the first threshold P=(P1+P0-offset×Pa-b)/(1+Pa).

A value of offset is 0 or a negative value (or a negative number). When the value of offset is a positive value (or a positive number), "+offset" in the formulas in Case 3 may be replaced with "-offset".

When the first device belongs to the foregoing second-type device, the second device may determine the first threshold according to Method 2. According to Method 2, when the first device belongs to the foregoing second-type device, the first device may determine, in Manner 2 and/or Manner 4, whether to transmit the second signal.

In Method 2, for a method in which the second device determines parameters required for calculating the first threshold, refer to the related manner in the foregoing Method 1. Details are not described herein again.

Method 3: In some embodiments of this application, the first threshold is related to the power at which the second device transmits the first signal and the target power at which the second device detects the second signal. The second device may determine the first threshold based on the two parameters. Specifically, the second device may use, as the first threshold, a half of a sum of the power at which the second device transmits the first signal and a power at which the second device expects to detect the second signal, that is, P=(P1+P0)/2.

According to Method 3, the first device may determine, in Manner 1 and/or Manner 3, whether to transmit the second signal.

Method 4: In some embodiments of this application, the first threshold is related to the power at which the second device transmits the first signal and the target power at which the second device detects the second signal. The second device may determine the first threshold based on the two parameters. Specifically, the second device may use, as the first threshold, a sum of the power at which the second device transmits the first signal and a power at which the second device expects to detect the second signal, that is, P=P1+P0.

According to Method 4, the first device may determine, in Manner 5 and/or Manner 6, whether to transmit the second signal.

In another possible solution, the first signaling may include a first threshold range of the first threshold. The first threshold range may be for determining the first threshold, that is, the first device may determine the first threshold based on the first threshold range.

In this solution, the first threshold range may be a threshold range corresponding to a first power loss parameter range. The first power loss parameter range is a range of a power loss parameter of the transmit end, and the first loss parameter range includes at least the power loss parameter of the first device, and may further include a power loss parameter of another device serving as the transmit end. In other words, the first threshold range is a threshold range (or threshold value range) determined based on the range of the power loss parameter of the transmit end.

In this solution, a lower bound (lower bound) (or referred to as a minimum value) of the first power loss parameter range may correspond to a lower bound of the first threshold range, and an upper bound (higher bound) (or referred to as a maximum value) of the first power loss parameter range may correspond to an upper bound of the first threshold range. The second device may determine the lower bound of the first threshold range based on the lower bound of the first power loss parameter range, and determine the upper bound of the first threshold range based on the upper bound of the first power loss parameter range, to obtain the first threshold range of the first threshold. For a method in which the second device determines a corresponding value in the first threshold range based on a value (for example, the lower bound/upper bound) in the first power loss parameter range, refer to the foregoing method in which the second device determines the first threshold. Details are not described herein again. Optionally, the second device may receive second signaling, to obtain the first power loss parameter range indicated by the second signaling. Optionally, the second signaling may be sent by a device (for example, the first device) that serves as a transmit end. Optionally, the first power loss parameter range may alternatively be predefined.

In this solution, after determining the first threshold range, the second device may send the first threshold range by using the first signaling. Optionally, the second device may directionally send the first signaling to at least one device including the first device, or may send the first signaling in a broadcast manner. This is not specifically limited in embodiments of this application.

The first device determines the first threshold based on the first threshold range, the power loss parameter, and the first power loss parameter range. Optionally, after receiving the first signaling, the first device may determine the first threshold based on the first threshold range included in the first signaling, the power loss parameter of the first device, and the first power loss parameter range. The power loss parameter of the first device, the first threshold range, the first power loss parameter range, and the first threshold meet the following condition: A difference between the power loss parameter of the first device and the lower bound of the first power loss parameter range is equal to a difference between the first threshold and the lower bound of the first threshold range; and/or a difference between the upper bound of the first power loss parameter range and the power loss parameter of the first device is equal to a difference between the upper bound of the first threshold range and the first threshold. The first device may determine the first threshold based on a difference between the power loss parameter of the first device and the upper bound and/or the lower bound of the first power loss parameter range, with reference to the first threshold range, and with the foregoing condition as a target.

Optionally, in this embodiment, before step S302, the method may further include the following step S305:
S305: The second device transmits the first signal.

In some embodiments of this application, the second device may transmit the first signal in a unicast, multicast, or broadcast manner. This is not specifically limited in embodiments of this application. Correspondingly, the first device may detect the first signal transmitted by the second device.

In this embodiment, that the second device transmits the first signal may specifically include: The second device transmits the first signal on the first path. Correspondingly, the first device may detect the first signal on the first path.

In this embodiment of this application, the "determining whether to transmit the second signal" in step S303 may also be replaced with "determining to transmit the second signal". According to the method, the first device may determine, in Manner 1 and/or Manner 2, to transmit the second signal.

### Embodiment 2

In some embodiments of this application, the transmit end in the backscatter communication scenario may determine, by comparing a path loss of backscatter communication performed by the transmit end with a path loss requirement that needs to be met, whether the transmit end supports completion of successful backscatter communication once (that is, backscatter communication that meets the path loss requirement). When determining that the transmit end supports completion of successful backscatter communication once, the transmit end may determine to perform corresponding backscatter communication. When determining that the transmit end does not support completion of successful backscatter communication once, the transmit end may determine not to perform corresponding backscatter communication. According to the method, necessity and a success rate of performing backscatter communication by the transmit end can be ensured, and unnecessary interference on a channel can be alleviated.

A method provided in this embodiment may be applied to a scenario in which a receive end and an excitation end in a backscatter communication system are inter-sited.

As shown in FIG. 5, a communication method provided in this embodiment of this application may include the following steps.

S501: A first device determines a first threshold.

Optionally, that the first device determines the first threshold may be: The first device receives first signaling, where the first signaling indicates the first threshold.

Optionally, the first threshold may alternatively be predefined.

In this embodiment, the first threshold may be used as a path loss requirement that needs to be met by the first device to perform backscattering transmission. Specifically, the first threshold may be used as an upper bound of a path loss of the first device for performing backscatter transmission.

In this embodiment, the first device may serve as a transmit end in a backscatter communication system. For example, the first device may be the IoT device shown in the foregoing topology structures 1 to 4.

Optionally, the first signaling received by the first device may be sent by a second device. The second device may serve as a receive end in the backscatter communication system.

S502: The first device detects a first signal.

In this embodiment, the first signal may be a signal on a first path, and the first path may be a communication path between the first device and a third device. In other words, the first signal detected by the first device may be a signal transmitted by the third device. The third device may serve as an excitation end in the backscatter communication system.

Optionally, a distance between the first device and the third device may be shorter than or equal to a specified distance.

It should be noted that step S502 and step S501 may be performed in any sequence. For example, step S501 may be performed before step S502, or may be performed simultaneously with step S502, or may be performed after step S502. This is not specifically limited in this embodiment.

S503: The first device determines, based on the first threshold and the first signal, whether to transmit the second signal. The second signal is a backscatter signal based on the first signal.

Determining whether to transmit the second signal may also be understood as determining whether a sending condition of the second signal is met. When determining, based on the first threshold and the first signal, that the sending condition of the second signal is met, the first device may determine to transmit the second signal. When determining, based on the first threshold and the first signal, that the sending condition of the second signal is not met, the first device may determine not to transmit the second signal.

In this embodiment, transmitting the second signal may specifically include: transmitting the second signal on a second path. The second path is a communication path between the first device and the second device.

In this embodiment, the receive end and the excitation end are inter-sited, and the first signal and the second signal are signals on different paths.

Specifically, in the topology structure 1, the terminal device may serve as an excitation end, and the base station may serve as a receive end.

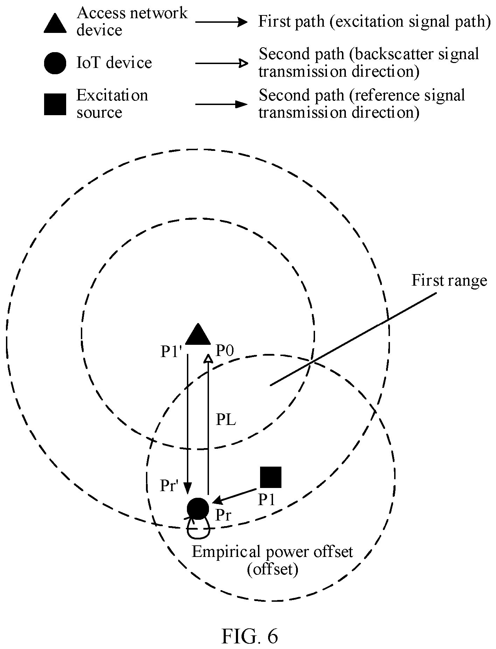

Example 3: In an example, in a possible scenario, a scenario in which the excitation end and the receive end in the backscatter communication scenario are inter-sited is used as an example. The first device may be an IoT device shown in FIG. 6, the second device may be an access network device shown in FIG. 6, and the third device may be an excitation source shown in FIG. 6. The IoT device may serve as a transmit end, the access network device may serve as a receive end, and the excitation source may serve as an excitation end. In this scenario, the first signal may be an excitation signal transmitted by the excitation source and detected by the IoT device, and the second signal may be a backscatter signal transmitted by the IoT device (to the access network device).

In this embodiment, after obtaining the first threshold and detecting the first signal, the first device may determine, based on the first threshold and the first signal, whether to transmit the second signal. Specifically, a manner in which the first device determines, based on the first threshold and the first signal, whether to transmit the second signal includes at least one of the following:

Manner 1: When a path loss for transmitting the second signal by the first device is less than or equal to the first threshold, determine to transmit the second signal.

Manner 2: When a path loss for transmitting the second signal by the first device is greater than the first threshold, determine not to transmit the second signal.

That the first device determines, based on the first threshold and the first signal, whether to transmit the second signal may be understood as at least one of the following:
when the path loss for transmitting the second signal by the first device is less than or equal to the first threshold, determining to transmit the second signal; or
when the path loss for transmitting the second signal by the first device is greater than the first threshold, determining not to transmit the second signal.

The first device may determine, based on a detected reference signal on the second path, the path loss for transmitting the second signal by the first device. Specifically, the second device may transmit the reference signal on the second path, and may send second signaling, where the second signaling indicates a power at which the second device transmits the reference signal. After detecting the reference signal on the second path and receiving the second signaling, the first device may determine a path loss of the signal on the second path based on signal strength of the detected reference signal and the power at which the second device transmits the reference signal, and use the determined path loss of the signal on the second path as the path loss for transmitting the second signal.

For ease of description, in this embodiment, the power at which the second device transmits the reference signal is denoted as P1', the signal strength of the reference signal detected by the first device is denoted as Pr', and the path loss for transmitting the second signal is denoted as PL.

In this embodiment, a value of the path loss for transmitting the second signal may be a difference between the power at which the second device transmits the reference signal and the signal strength of the reference signal detected by the first device, that is, PL=P1'-Pr'.

In this embodiment, when determining not to transmit the second signal, the first device may perform energy storage. Specifically, the first device may perform energy storage based on the first signal.

In the foregoing method, the first device may compare whether an actual path loss (namely, PL) of the first device during backscattering transmission meets a corresponding path loss requirement (namely, the first threshold), to determine whether the first device can support backscattering transmission that meets the path loss requirement. The first device may send the second signal when determining that the first device can support backscatter transmission that meets the path loss requirement. When determining that the first device cannot support backscatter transmission that meets the path loss requirement, skip sending the second signal. Therefore, the first device can ensure that the receive end can receive the corresponding second signal during backscatter transmission. Therefore, according to the method, necessity and a success rate of performing backscatter communication can be ensured, and unnecessary interference on a channel can be alleviated, thereby improving communication efficiency.

Optionally, in this embodiment, before step S501, the method may further include the following step S504:
S504: The second device sends the first signaling.

In this embodiment, the first signaling may include the first threshold. The first threshold may be used as a trigger threshold for determining whether to perform backscatter communication. The first threshold is a power value. The first threshold may be used as an upper bound of a path loss that needs to be met by the first device to perform backscatter transmission. As described in the foregoing method, the first device may determine, based on the first threshold and the path loss of the first device for performing backscatter transmission, whether to perform backscatter transmission.

Optionally, in this solution, that the second device sends the first signaling may specifically include: The second device sends the first signaling to the first device.

The following describes in detail a method for determining the first threshold.

For ease of description, in this embodiment, a target power at which the second device detects the second signal is denoted as P0, a power at which the third device transmits the first signal is denoted as P1, a path loss between the first device and the third device is denoted as PL', signal strength of the first signal detected by the first device is denoted as Pr, a power parameter of the first device is denoted as Ps, a power amplification parameter of the first device is denoted as Pa, a power loss parameter of the first device is denoted as offset, and the first threshold is denoted as P. Pr=P1-PL'.

In this embodiment, the first threshold is related to the target power at which the second device detects the second signal, the power at which the third device transmits the first signal, the path loss between the first device and the third device, and the power parameter of the first device. The second device may determine the first threshold based on the four parameters. For details, refer to the following Method 1 or Method 2.

Method 1: In some embodiments of this application, the power amplification parameter of the first device may indicate energy stored by the first device or a power that can be provided by a power amplifier of the device for performing backscatter transmission. In this scenario, the second device may use, as the first threshold, a difference between a sum of the power at which the third device transmits the first signal and the power parameter of the first device and the target power at which the second device detects the second signal and the path loss between the first device and the third device, that is, P=P1+Ps-P0-PL'.

For content such as the target power at which the second device detects the second signal, the power parameter of the first device, and the method for determining the power parameter of the first device by the second device, refer to the corresponding content described in Embodiment 1. Details are not described herein again.

In this embodiment, in an optional implementation, the second device may determine the power at which the third device transmits the first signal and the path loss between the first device and the third device. For example, the power at which the third device transmits the first signal may be preconfigured or notified by using signaling by the second device. Alternatively, the power at which the third device transmits the first signal may be predefined. The second device may use a second specified parameter (for example, 0) or an empirical loss (that is, a path loss determined based on experience) as the path loss between the first device and the third device. In another optional implementation, the second device may receive third signaling sent by the first device or the third device, to obtain the power, as indicated by the third signaling, at which the first device transmits the first signal. The second device may receive fourth signaling sent by the first device or the third device, to obtain the path loss between the first device and the third device as indicated by the fourth signaling. In another optional implementation, the second device may alternatively determine, through predefinition, the power at which the first device transmits the first signal.

In the method, in an optional implementation, Ps=offset, and the second device may determine the first threshold according to the following formula: P=P1-PL'+offset-P0. In another optional implementation, Ps=Pa+offset, and the second device may determine the first threshold according to the following formula: P=P1-PL'+Pa+offset-P0.

It should be noted that the power loss parameter in the foregoing method is 0 or a negative value (or a negative number). When the power loss parameter is a positive value (or a positive number), "+offset" in the foregoing method may be replaced with "-offset".

Example 4: In an example, according to the method provided in this embodiment, in the scenario described in Example 3, P0 represents a target power at which the access network device detects the second signal, P1 represents a power at which the excitation source transmits the first signal, PL' represents a path loss between the IoT device and the excitation source, offset represents a power loss parameter offset of the IoT device, and P represents the first threshold.

In Example 4, when an empirical power offset offset of the IoT device is 0 or a negative value, the trigger threshold P may satisfy the following formula: P=P1-PL'+offset-P0; or when an empirical power offset offset of the IoT device is 0 or a positive value, the trigger threshold P may satisfy the following formula: P=P1-PL'-offset-P0. In conclusion, the trigger threshold P may satisfy the following formula: P=(P1-PL'-|offset|-P0, where |offset| represents an absolute value of offset.

In Example 4, after determining PL and P according to the foregoing method, if determining that PL is less than or equal to P, the IoT device determines to perform backscatter transmission; or if determining that PL is less than P, the IoT device determines not to perform backscatter transmission. When determining to perform backscatter transmission, the IoT device may modulate to-be-sent information to the excitation signal, to obtain a backscatter signal, and transmit the backscatter signal. When determining not to perform backscatter transmission, the IoT device may convert the received excitation signal into energy for storage. The energy stored by the IoT device in this manner may be used for next backscatter communication.

According to the foregoing method, in the scenario shown in FIG. 6, the IoT device within a first range may be an IoT device meeting the condition that PL is less than or equal to P. The IoT device within the first range may directly perform backscattering transmission based on the received excitation signal. The IoT device outside the first range needs to use additional energy to implement backscatter transmission.

In Example 4, an excitation signal is obtained on the first path between the excitation source and the IoT device (namely, a first path shown in FIG. 6), and when a backscatter signal is sent on the second path between the IoT device and the access network device (namely, a second path shown in FIG. 6), the IoT device determines whether a path loss (namely, PL) for transmitting the backscatter signal meets a corresponding path loss requirement (namely, P), and sends the backscatter signal when the corresponding path loss requirement is met. It can be ensured that the backscatter signal can be successfully and accurately detected (that is, received) by the access network device as long as the IoT device transmits the backscatter signal. Therefore, according to the method, necessity and a success rate of performing backscatter communication can be ensured, and unnecessary interference on a channel can be alleviated, thereby improving communication efficiency.

Method 2: In some embodiments of this application, the power amplification parameter of the first device may indicate a degree to which the first device can amplify a power (which may also be replaced with signal strength in the method). The first device may amplify the power by using stored energy.

In this scenario, the power amplification parameter Pa may be used as an amplification multiple. When the device performs linear amplification on the power, a power obtained through amplification may be a product of the power before amplification and Pa. That is, the power obtained through amplification and the power before amplification satisfy the following formula: P_{A}=Pa×P_{B}. P_{A} represents the power obtained through amplification, and P_{B} represents the power before amplification. When the device performs non-linear amplification on the power (or the signal strength), in an optional implementation, a power obtained through amplification may be a product of the power before amplification and Pa, plus a first specified value b. That is, the power obtained through amplification and the power before amplification satisfy the following formula: P_{A}=Pa×P_{B}+b. P_{A} represents the power obtained through amplification, P_{B} represents the power before amplification, and b represents the first specified value, where b is a positive value. In this manner, Pa may be used to represent a linear amplification part in non-linear amplification, and b may be used to represent a non-linear amplification part in non-linear amplification. When a rule for the device to perform non-linear amplification on the power is another formula, a relationship between P_{A} and P_{B} may be determined in a similar manner.

In this scenario, the second device may use, as the first threshold, a value obtained by subtracting the target power at which the second device detects the second signal from a sum of b and a product of the power amplification parameter of the first device and a sum of the signal strength of the first signal detected by the first device and the power loss parameter of the first device. The signal strength of the first signal detected by the first device may be a difference between the power at which the third device transmits the first signal and the path loss between the first device and the third device. That is, P=(Pr+offset)×Pa+b-P0=(P1-PL'+offset)×Pa+b-P0.

A value of offset is 0 or a negative value (or a negative number). When the value of offset is a positive value (or a positive number), "+offset" in the formulas in Method 2 may be replaced with "-offset".

When the first device belongs to the foregoing second-type device, the second device may determine the first threshold according to Method 2. According to Method 2, when the first device belongs to the foregoing second-type device, the first device may determine, in Manner 1 and/or Manner 2, whether to transmit the second signal.

In Method 2, for a method in which the second device determines parameters required for calculating the first threshold, refer to corresponding content in the foregoing Method 1. Details are not described herein again.

Optionally, in this embodiment, before step S502, the method may further include the following step S505:
S505: The third device transmits the first signal.

In some embodiments of this application, the third device may transmit the first signal in a unicast, multicast, or broadcast manner. This is not specifically limited in embodiments of this application. Correspondingly, the first device may detect the first signal transmitted by the third device.

In this embodiment, that the third device transmits the first signal may specifically include: The third device transmits the first signal on the first path. Correspondingly, the first device may detect the first signal on the first path.

In this embodiment of this application, the "determining whether to transmit the second signal" in step S503 may also be replaced with "determining to transmit the second signal". According to the method, the first device may determine, in Manner 1 in this embodiment, to transmit the second signal.

### Embodiment 3

In some embodiments of this application, a receive end in the backscatter communication scenario may indicate, to a transmit end, a power (that is, a target receive power) of a backscatter signal from the transmit end that the receive end expects to detect, and the transmit end may determine, based on the power, a power required for performing backscatter communication (that is, sending the backscatter signal). The transmit end may determine, by comparing a power that can be used by the transmit end for backscatter communication with a power required for performing backscatter communication, whether the transmit end supports completion of successful backscatter communication once. When determining that the transmit end supports completion of successful backscatter communication once, the transmit end may determine to perform corresponding backscatter communication; or when determining that the transmit end does not support completion of successful backscatter communication once, the transmit end may determine not to perform corresponding backscatter communication. According to the method, necessity and a success rate of performing backscatter communication by the transmit end can be ensured, and unnecessary interference on a channel can be alleviated.

A method provided in this embodiment may be applied to a scenario in which a receive end and an excitation end in a backscatter communication system are co-sited.

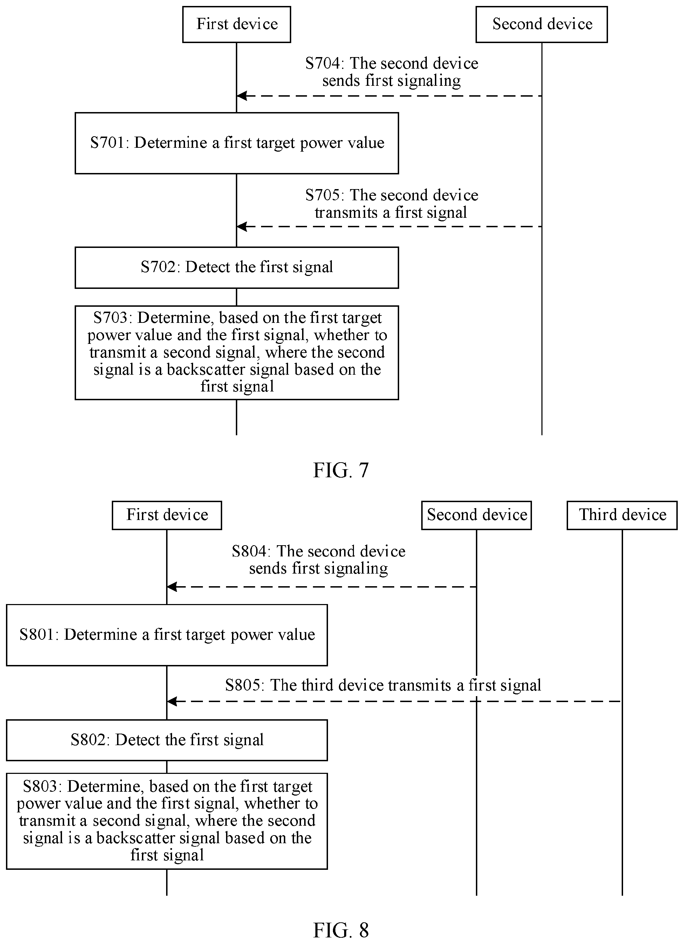

As shown in FIG. 7, a communication method provided in this embodiment may include the following steps.

S701: A first device determines a first target power value.

Optionally, that the first device determines the first target power value may be: The first device receives first signaling, where the first signaling indicates the first target power value.

Optionally, the first target power value may alternatively be predefined.

The first target power value may be used by the first device to determine whether to send a backscatter signal, that is, a second signal described below. It may also be understood as that the first target power value may be used by the first device to determine whether to perform backscatter transmission. In this application, the power may also be understood as signal strength. In other words, the first target power value may also be replaced with a first target signal strength value.

In this embodiment, the first device may serve as a transmit end in a backscatter communication system. For example, the first device may be the IoT device shown in the foregoing topology structures 1 to 4.

Optionally, the first signaling received by the first device may be sent by a second device. The second device may serve as a receive end in the backscatter communication system.

S702: The first device detects a first signal.

In this embodiment, the first signal may be a signal on a first path, and the first path may be a communication path between the first device and the second device. In other words, the first signal detected by the first device may be a signal sent by the second device. The second device may serve as an excitation end in the backscatter communication system. For example, the second device may be the device, shown in the foregoing topology structures 1 to 4, that may serve as both the receive end and the excitation end, for example, the access network device, the relay node, the assisting node, or the terminal device.

It should be noted that step S702 and step S701 may be performed in any sequence. For example, step S701 may be performed before step S702, or may be performed simultaneously with step S702, or may be performed after step S702. This is not specifically limited in this embodiment.

S703: The first device determines, based on the first target power value and the first signal, whether to transmit a second signal, where the second signal is a backscatter signal based on the first signal.

Determining whether to transmit the second signal may also be understood as determining whether a sending condition of the second signal is met. When determining, based on the first target power value and the first signal, that the sending condition of the second signal is met, the first device may determine to transmit the second signal. When determining, based on the first target power value and the first signal, that the sending condition of the second signal is not met, the first device may determine not to transmit the second signal.

In this embodiment, the second signal belongs to a backscatter signal, or the second signal may also be referred to as a backscatter signal.

In this embodiment, transmitting the second signal may specifically include: transmitting the second signal on the first path.

In this embodiment, the receive end and the excitation end are co-sited, that is, both the receive end and the excitation end are second devices, and the first signal and the second signal are signals on a same path (that is, the first path).

For example, the method provided in this embodiment may be applied to any possible scenario described in Example 1.

For ease of description, in this embodiment, the first target power value is denoted as P0, a transmit power of the first signal is denoted as P1, signal strength of the first signal detected by the first device is denoted as Pr, a path loss of the second signal on the first path is denoted as PL, a target transmit power of the second signal is denoted as Ptx, a target transmit power candidate value of the second signal is denoted as Ptx', a specified power value is denoted as Pmax, a power at which the first device transmits the second signal is denoted as P2, a power parameter of the first device is denoted as Ps, a power amplification parameter of the first device is denoted as Pa, and a power loss parameter of the first device is denoted as offset.

In this embodiment, the first device may determine the target transmit power of the second signal based on the first target power value, may determine, based on the first signal, the power at which the second signal is transmitted, and then determine, based on the target transmit power of the second signal and the power at which the second signal is transmitted, whether to transmit the second signal.

It should be noted that the target transmit power of the second signal in embodiments of this application may also be understood as a target power at which the second signal is transmitted or a power required for transmitting the second signal. The power at which the second signal is transmitted may also be understood as a power for transmitting the second signal.

The following describes in detail a method in which the first device determines, based on the first signal, the power at which the second signal is transmitted.

In this embodiment, the power at which the second signal is transmitted may be determined by the first device based on the signal strength of the detected first signal, may be determined by the first device based on the signal strength of the detected first signal and the power parameter of the first device, or may be determined by the first device based on the signal strength of the detected first signal, the power parameter of the first device, and a specified linear or non-linear transformation formula. For the power parameter of the first device, refer to the descriptions in Embodiment 1. Details are not described herein again. For details, refer to the following Method 1 to Method 3.

Method 1: The power at which the second signal is transmitted may be a sum of the signal strength of the first signal detected by the first device and the power parameter of the first device, that is, P2=Pr+Ps.

When the first device belongs to the foregoing first-type device, Ps=offset. When the first device belongs to the foregoing second-type device, Ps=Pa+offset.

In this scenario, the power amplification parameter of the first device may indicate energy stored by the first device or a power that can be provided by a power amplifier of the device for performing backscatter transmission.

Method 2: The power at which the second signal is transmitted may be a sum of a first specified value and a product of the power amplification parameter of the first device and a sum of the signal strength of the first signal detected by the first device and the power loss parameter of the first device, that is, P2=(Pr+offset)×Pa+b. Alternatively, the power at which the second signal is transmitted may be a product of the power amplification parameter of the first device and a sum of the signal strength of the first signal detected by the first device and the power loss parameter of the first device, that is, P2=(Pr+offset)×Pa.

When the first device belongs to the foregoing second-type device, the first device may determine, according to Method 3, the power at which the second signal is transmitted.

In this scenario, the power amplification parameter of the first device may indicate a degree to which the first device can amplify a power (which may also be replaced with signal strength in the method).

For a method for determining another related parameter in the foregoing method, refer to corresponding descriptions in Embodiment 1. Details are not described in this embodiment again.

The following describes in detail a method in which the first device determines the target transmit power of the second signal based on the first target power value.

In this embodiment, the target transmit power of the second signal is related to the first target power value, the transmit power of the first signal, and the signal strength of the first signal detected by the first device. Optionally, the target transmit power of the second signal is further related to a specified power value. The specified power value indicates an upper bound of a power used by the first device to perform backscattering transmission. For example, the specified power value may be denoted as Pmax.

The transmit power of the first signal is a power at which the second device transmits the first signal. In this embodiment, the first device may receive second signaling sent by the second device, to obtain the transmit power of the first signal as indicated by the second signaling. The first device may further obtain the transmit power of the first signal through predefinition.

In this embodiment, the first device may determine the target transmit power candidate value of the second signal based on three parameters, namely, the transmit power of the first signal, the signal strength of the first signal detected by the first device, and the first target power value. The target transmit power candidate value indicates a power actually required by the first device to transmit the second signal, and the actually required power may also be understood as a theoretically required power.

In this embodiment, the target transmit power candidate value of the second signal may be a sum of the first target power value and a difference between the transmit power of the first signal and the signal strength of the first signal detected by the first device, that is, Ptx'=P0+P1-Pr. The difference between the transmit power of the first signal and the signal strength of the first signal detected by the first device indicates the path loss for transmitting the second signal (namely, the path loss of the second signal on the first path), that is, PL=P1-Pr. However, Ptx=P0+PL. Therefore, the first device may first determine PL based on P1 and Pr, and then determine Ptx' based on PL and P0.

In an optional implementation, after determining the target transmit power candidate value of the second signal, the first device may directly use the target transmit power candidate value as the target transmit power of the second signal, that is, Ptx=Ptx'. In another optional implementation, after determining the target transmit power candidate value of the second signal, the first device may use a minimum value (or a smaller value) of the target transmit power candidate value and the specified power value as the target transmit power of the second signal, that is, Ptx=min{Ptx',Pmax}, where min means selection of a minimum value.

In this embodiment, a specific manner in which the first device determines, based on the target transmit power of the second signal and the power at which the second signal is transmitted, whether to transmit the second signal may include at least one of the following manners:
Manner 1: When the power at which the second signal is transmitted is greater than or equal to the target transmit power of the second signal, the first device determines to transmit the second signal.
Manner 2: When the power at which the second signal is transmitted is less than the target transmit power of the second signal, the first device determines not to transmit the second signal.

That the first device determines, based on the target transmit power of the second signal and the power at which the second signal is transmitted, whether to transmit the second signal may be understood as at least one of the following:
when the power for transmitting the second signal is greater than or equal to the target transmit power of the second signal, the first device determines to transmit the second signal; or
when the power for transmitting the second signal is less than the target transmit power of the second signal, the first device determines not to transmit the second signal.

In this embodiment, when determining not to transmit the second signal, the first device may perform energy storage. Specifically, the first device may perform energy storage based on the first signal.

In this application, "a power at which a specific signal is transmitted" may also be understood as "a power for a specific signal to be transmitted".

In the foregoing method, the first device may determine a power used for backscatter transmission and a power required for backscatter transmission, and may compare whether the power used by the first device for backscatter transmission meets a requirement for the power required for backscatter transmission, to determine whether the power provided by the first device is sufficient for backscatter transmission. The first device may send the second signal when determining that the power provided by the first device is sufficient for backscatter transmission, and may not send the second signal when determining that the power provided by the first device is insufficient for backscatter transmission. Therefore, the first device can ensure that the receive end can receive the corresponding second signal during backscatter transmission. Therefore, according to the method, necessity and a success rate of performing backscatter communication can be ensured, and unnecessary interference on a channel can be alleviated, thereby improving communication efficiency.

Example 5: In an example, according to the method provided in this embodiment, in any possible scenario described in Example 1, P0 represents the first target power value, P0 represents a target power at which the second device detects a backscatter signal, P1 represents a power at which the second device transmits an excitation signal, and Pr represents signal strength of the excitation signal detected by the first device.

In the first possible scenario described in Example 1, the second device may be an access network device, and the first device may be an IoT device. In the second possible scenario described in Example 1, the second device may be a terminal device, and the first device may be an IoT device.

According to the method provided in this embodiment, the second device may indicate, to the first device, at least one of the power P1 at which the excitation signal is transmitted and the target power P0 at which the backscatter signal is received. Alternatively, the first device may obtain, in a predefined manner, at least one of the power P1 at which the excitation signal is transmitted and the target power P0 at which the backscatter signal is received.

In this application, obtaining may also be understood as determining.

In an optional implementation, the first device may determine, based on P1, P0, and Pr, the power required for performing backscatter communication, that is, the target transmit power Ptx of the second signal is P1-Pr+P0.

In another optional implementation, to prevent the power, determined by the first device, required for performing backscatter communication from exceeding an upper bound of the power that can be provided by the first device, after determining the power required for performing backscatter communication (that is, P0+PL=P0+P1-Pr), the first device may select a smaller (or minimum) power from the power and the upper bound of the power that can be provided by the first device as the finally determined power required for performing backscatter communication. Therefore, the first device may determine, based on P1, P0, Pr, and Pmax, the power required for performing backscatter communication, that is, the target transmit power Ptx of the second signal is min{P0+P1-Pr,Pmax}.

It should be noted that, both Ptx in this example and P in Example 2 in Embodiment 1 may represent the power required by the first device to perform backscatter communication. A difference lies in that P is indicated by the second device to the first device, and Ptx is calculated by the first device.

In Example 5, when the first device belongs to the foregoing first-type device, P2=Pr+offset; or when the first device belongs to the foregoing second-type device, P2=Pr+Pa+offset, or P2=(Pr+offset)×Pa+b. The power loss parameter is 0 or a negative value (or a negative number). Optionally, when the power loss parameter is a positive value (or a positive number), "+offset" in the foregoing descriptions may be replaced with "-offset".

In Embodiment 5, for a method in which the first device determines, based on P2 and Ptx, whether to perform backscatter transmission and a subsequent processing method, refer to the method in which the first device determines, based on P2 and P, whether to perform backscatter transmission and the subsequent processing method in Embodiment 1. Details are not described herein again.

Optionally, in this embodiment, before step S701, the method may further include the following step S704:

S704: The second device sends the first signaling.

In a possible solution, the first signaling may include the first target power value.

In another possible solution, the first signaling may include a ratio of the first target power value to a first specified power value. For example, the first specified power value may be a cell reference signal (cell reference signal, CRS) power or the like. This is not specifically limited in embodiments of this application. According to this solution, the first device may determine the first target power value based on the first specified power and the ratio indicated by the first signaling.

In still another possible solution, the first signaling may include a power level corresponding to the first target power value, where different power levels may correspond to different power values. According to this solution, the first device may determine the first target power value based on a power level corresponding to the first specified power. Optionally, in this solution, the first target power value may correspond to a first distance range, and a distance over which the second signal is to be transmitted is within the first distance range.

Specifically, a power at which the second device transmits the excitation signal (for example, the first signal in this embodiment) may be classified into a plurality of levels. To be specific, the power available for the second device to transmit the excitation signal may include a plurality of different levels of power, the second device may select one level of power from a plurality of different levels of power as the power at which the excitation signal is transmitted. In an optional implementation, powers of different levels may correspond to different distance ranges. When the second device needs to transmit the excitation signal to the first device, the second device may determine, based on a distance between the second device and the first device, a distance range corresponding to (or of) the first device, and transmit the excitation signal to the first device based on a power at a level corresponding to the distance range.

In an example, in the scenario described in Example 1, when indicating, to the first device, the power P1 at which the excitation signal is sent, the second device may directly indicate a specific power value, namely, P1, to the first device; may indicate, to the first device, a ratio of P1 to a specified power; or may indicate, to the first device, a level corresponding to P1. After the second device indicates the ratio of P1 to the specified power to the first device, the first device may determine P1 based on the ratio and the specified power. After the second device indicates the level corresponding to P1 to the first device, the first device may determine P1 based on the level and a preconfigured correspondence between different powers and levels.

In a possible solution, after the second device indicates the first target power value to the first device according to the foregoing solution, the second device may transmit a third signal on the first path when determining that specified duration is up and the second signal is not detected (which may also be understood as that the second signal is not received within the specified duration). The third signal is an excitation signal, and a power at which the second device transmits the third signal is greater than the power at which the second device transmits the first signal. In other words, after transmitting the excitation signal, if the second device does not detect, within the specified duration, a backscatter signal that is based on the excitation signal, the second device may increase the power for transmitting the excitation signal, and then transmit the excitation signal again based on the increased power. By analogy, the second device may repeatedly transmit the excitation signal a plurality of times. Optionally, when determining that a specified condition is met, the second device may stop repeatedly transmitting the excitation signal. For example, the specified condition may be that the second device detects the backscatter signal that is based on the excitation signal, the second device increases the power for sending the excitation signal to an available power upper bound (for example, the power upper bound may be a specified value), or a quantity of times that the second device repeatedly sends the excitation signal reaches a specified quantity of times. This is not specifically limited in embodiments of this application.

Optionally, in the foregoing solution, when increasing the power for transmitting the excitation signal, the second device may increase the power for transmitting the excitation signal by one level. In this manner, a power level corresponding to the power at which the second device transmits the third signal may be different from a power level corresponding to the power at which the second device transmits the first signal. Specifically, the power level corresponding to the power at which the second device transmits the third signal may be higher than the power level corresponding to the power at which the second device transmits the first signal.

In an example, in the scenario described in Example 1, the power available for the second device to transmit the excitation signal may include a first-level power and a second-level power. The first-level power is lower than the second-level power. The first-level power may correspond to the first distance range (for example, the first range shown in FIG. 4), and the second-level power may correspond to a second distance range (for example, a range outside the first range shown in FIG. 4). When the second device needs to transmit the excitation signal, if determining that the first device is within the first distance range, the second device may transmit the excitation signal based on the first-level power. After transmitting the excitation signal based on the first-level power, if the second device does not receive the corresponding backscatter signal within the specified duration, the second device may transmit the excitation signal again based on the second-level power, to provide more energy for the first device to perform backscatter transmission, and improve a success rate of performing backscatter transmission by the first device.

Optionally, in this embodiment, before step S702, the method may further include the following step S705:
S705: The second device transmits the first signal.

In some embodiments of this application, the second device may transmit the first signal in a unicast, multicast, or broadcast manner. This is not specifically limited in embodiments of this application. Correspondingly, the first device may detect the first signal transmitted by the second device.

In this embodiment, that the second device transmits the first signal may specifically include: The second device transmits the first signal on the first path. Correspondingly, the first device may detect the first signal on the first path.

In some embodiments of this application, the "determining whether to transmit the second signal" in step S703 may also be replaced with "determining to transmit the second signal". According to the method, the first device may determine, in Manner 1, to transmit the second signal.

In the method provided in this embodiment, the excitation signal is obtained in a first direction of a same path between the first device and the second device (namely, an excitation signal transmission direction shown in FIG. 4), and when the backscatter signal is sent in a second direction (namely, a backscatter signal transmission direction shown in FIG. 4), the first device may determine, based on related data (namely, P1 and P0) indicated by the second device, a power required for performing backscatter transmission, namely, a power required for sending the backscatter signal, and further determine whether the provided power for sending the backscatter signal meets a power requirement for sending the backscatter signal, it can be ensured that the second device can successfully and accurately detect (that is, receive) the backscatter signal provided that the first device sends the backscatter signal. This can ensure that the backscatter signal can be successfully and accurately detected (that is, received) by the second device as long as the first device sends the backscatter signal. Therefore, according to the method, necessity and a success rate of performing backscatter transmission can be ensured, and unnecessary interference on a channel can be alleviated, thereby improving communication efficiency.

### Embodiment 4

Based on a same technical concept as Embodiment 3, this embodiment provides a communication method that may be applied to a scenario in which a receive end and an excitation end in a backscatter communication system are inter-sited.

As shown in FIG. 8, a communication method provided in this embodiment may include the following steps.

S801: A first device determines a first target power value.

Optionally, that the first device determines the first target power value may be: The first device receives first signaling, where the first signaling indicates the first target power value.

Optionally, the first target power value may alternatively be predefined.

For a specific implementation of step S801, refer to step S701. Details are not described herein again.

S802: The first device detects a first signal.

In this embodiment, the first signal may be a signal on a second path. The second path may be a communication path between the first device and a third device. In other words, the first signal detected by the first device may be a signal transmitted by the third device. The third device may serve as an excitation end in the backscatter communication system. The third device and the second device are different devices.

It should be noted that step S802 and step S801 may be performed in any sequence. For example, step S801 may be performed before step S802, or may be performed simultaneously with step S802, or may be performed after step S802. This is not specifically limited in this embodiment.

S803: The first device determines, based on the first target power value and the first signal, whether to transmit a second signal, where the second signal is a backscatter signal based on the first signal.

Determining whether to transmit the second signal may also be understood as determining whether a sending condition of the second signal is met. When determining, based on the first target power value and the first signal, that the sending condition of the second signal is met, the first device may determine to transmit the second signal. When determining, based on the first target power value and the first signal, that the sending condition of the second signal is not met, the first device may determine not to transmit the second signal.

In this embodiment, the second signal belongs to a backscatter signal, or the second signal may also be referred to as a backscatter signal.

In this embodiment, transmitting the second signal may specifically include: transmitting the second signal on a second path.

In this embodiment, the receive end and the excitation end are inter-sited, and the first signal and the second signal are signals on different paths.

For example, the method provided in this embodiment may be applied to the scenarios described in Example 3.

For ease of description, in this embodiment, the first target power value is denoted as P0, a power at which the second device transmits a reference signal is denoted as P1', signal strength of the reference signal detected by the first device is denoted as Pr', a path loss for transmitting the second signal is denoted as PL, a target transmit power of the second signal is denoted as Ptx, a target transmit power candidate value of the second signal is denoted as Ptx', a specified power value is denoted as Pmax, a power at which the first device transmits the second signal is denoted as P2, a power parameter of the first device is denoted as Ps, a power amplification parameter of the first device is denoted as Pa, and a power loss parameter of the first device is denoted as offset.

In this embodiment, the first device may determine the target transmit power of the second signal based on the first target power value, may determine, based on the first signal, the power at which the second signal is transmitted, and then determine, based on the target transmit power of the second signal and the power at which the second signal is transmitted, whether to transmit the second signal.

In this embodiment, for a method in which the first device determines, based on the first signal, the power at which the second signal is transmitted, refer to the method in which the first device determines, based on the first signal, the power at which the second signal is transmitted in Embodiment 3. Details are not described herein again.

The following describes in detail a method in which the first device determines the target transmit power of the second signal based on the first target power value.

In this embodiment, the target transmit power of the second signal is related to the first target power value and the path loss for transmitting the second signal. The path loss for transmitting the second signal may also be understood as a loss of the second signal on the second path or a path loss of the second path. Optionally, the target transmit power of the second signal is further related to a specified power value. The specified power value indicates an upper bound of a power used by the first device to perform backscattering transmission. For example, the specified power value may be denoted as Pmax.

In this embodiment, the first device may determine, based on a detected reference signal on the second path, the path loss for transmitting the second signal by the first device. Specifically, the second device may transmit the reference signal on the second path, and may send second signaling, where the second signaling indicates a power at which the second device transmits the reference signal. After detecting the reference signal on the second path and receiving the second signaling, the first device may determine a path loss of the signal on the second path based on signal strength of the detected reference signal and the power at which the second device transmits the reference signal, and use the determined path loss of the signal on the second path as the path loss for transmitting the second signal.

In this embodiment, a value of the path loss for transmitting the second signal may be a difference between the power at which the second device transmits the reference signal and the signal strength of the reference signal detected by the first device, that is, PL=P1'-Pr'.

In this embodiment, the first device may determine the target transmit power candidate value of the second signal based on the first target power value and the path loss for transmitting the second signal. The target transmit power candidate value indicates a power actually required by the first device to transmit the second signal, and the actually required power may also be understood as a theoretically required power.

In this embodiment, the target transmit power candidate value of the second signal may be a sum of the first target power value and the path loss of the second signal, that is, Ptx=P0+PL.

In an optional implementation, after determining the target transmit power candidate value of the second signal, the first device may directly use the target transmit power candidate value as the target transmit power of the second signal, that is, Ptx=Ptx'. In another optional implementation, after determining the target transmit power candidate value of the second signal, the first device may use a minimum value (or a smaller value) of the target transmit power candidate value and the specified power value as the target transmit power of the second signal, that is, Ptx=min{Ptx',Pmax}, where min means selection of a minimum value.

For related content such as a specific manner in which the first device determines, based on the target transmit power of the second signal and the power at which the second signal is transmitted, whether to transmit the second signal and subsequent processing, refer to the method described in Embodiment 3. Details are not described in this embodiment again.

Example 6: In an example, according to the method provided in this embodiment, in the scenario described in Example 3, the access network device may indicate, to the IoT device, a target power P0 for detecting the backscatter signal, and the IoT device may determine, based on P0 and a derived path loss PL, a power Ptx required for performing backscatter communication, and then determine, based on the power Ptx required for performing backscatter communication and a power P2 used by the IoT device for performing backscatter communication, whether to perform backscatter communication.

According to the method similar to the method in Example 5, the IoT device may determine the power required for performing backscatter communication, that is, the target transmit power Ptx of the second signal is P0+P1'-Pr' or min{P0+P1'-Pr',Pmax}.

In Example 6, when the IoT device belongs to the foregoing first-type device, P2=Pr+offset; or when the IoT device belongs to the foregoing second-type device, P2=Pr+Pa+offset, or P2=(Pr+offset)×Pa+b. The power loss parameter is 0 or a negative value (or a negative number), where b is 0 or a positive value (or a positive number). Optionally, when the power loss parameter is a positive value (or a positive number), "+offset" in the foregoing descriptions may be replaced with "-offset".

In Embodiment 6, for a method in which the IoT device determines, based on P2 and Ptx, whether to perform backscatter transmission and a subsequent processing method, refer to the method in which the IoT device determines, based on P2 and P, whether to perform backscatter transmission and the subsequent processing method in Embodiment 1. Details are not described herein again.

Optionally, in this embodiment, before step S801, the method may further include the following step S804:
S804: The second device sends the first signaling.

For a specific implementation of step S804, refer to step S704. Details are not described in this embodiment again.

Optionally, in this embodiment, before step S802, the method may further include the following step S805:
S805: The third device transmits the first signal.

In some embodiments of this application, the third device may transmit the first signal in a unicast, multicast, or broadcast manner. This is not specifically limited in embodiments of this application. Correspondingly, the first device may detect the first signal transmitted by the third device.

In this embodiment, that the third device transmits the first signal may specifically include: The third device sends the first signal on a first path. Correspondingly, the first device may detect the first signal on the first path.

In some embodiments of this application, the "determining whether to transmit the second signal" in step S803 may also be replaced with "determining to transmit the second signal". According to the method, the first device may determine, in the corresponding method in the foregoing embodiment, to transmit the second signal.

In the method provided in this embodiment, the excitation signal is obtained on the first path between the first device and the third device (namely, a first path shown in FIG. 6), and when the backscatter signal is sent on the second path between the first device and the second device (namely, a second path shown in FIG. 6), the first device may determine, based on related data (namely, P0) indicated by the second device, a power required for performing backscatter transmission, namely, a power required for sending the backscatter signal, and further determine whether the provided power for sending the backscatter signal meets a power requirement for sending the backscatter signal, it can be ensured that the second device can successfully and accurately detect (that is, receive) the backscatter signal provided that the first device sends the backscatter signal. This can ensure that the backscatter signal can be successfully and accurately detected (that is, received) by the second device as long as the first device sends the backscatter signal. Therefore, according to the method, necessity and a success rate of performing backscatter transmission can be ensured, and unnecessary interference on a channel can be alleviated, thereby improving communication efficiency.

It should be noted that the methods described in the foregoing embodiments are merely examples of execution methods applicable to the solutions of this application, and do not constitute a limitation on the solutions of this application. Execution methods that do not conflict with each other in embodiments of this application may be used in combination, and are not enumerated one by one in embodiments of this application.

The foregoing describes the solutions provided in embodiments of this application. It may be understood that, to implement the foregoing functions, each device may include a corresponding hardware structure and/or software module for performing each function. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

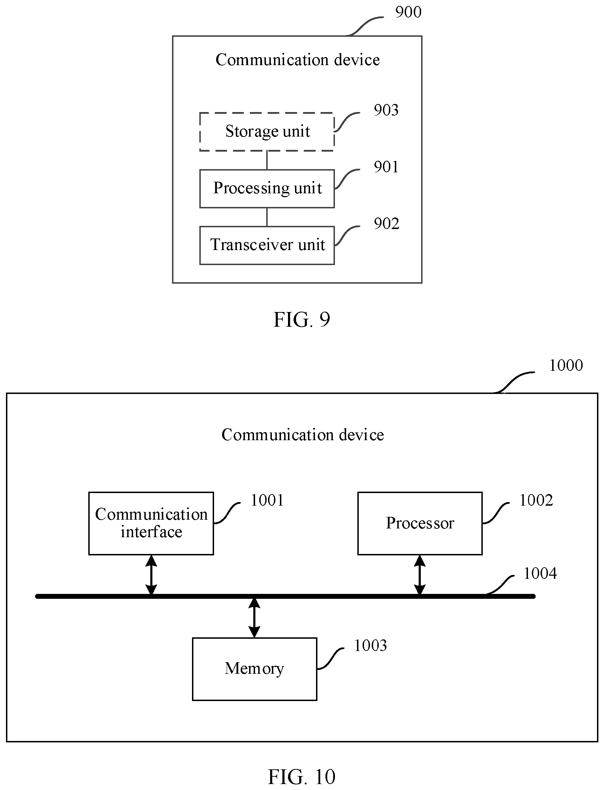

Based on the foregoing embodiments and a same technical concept, an embodiment of this application further provides a communication device, configured to implement a function of the device provided in embodiments of this application. As shown in FIG. 9, a communication device 900 may include a processing unit 901 and a transceiver unit 902. The communication device 900 may be the device in any one of the foregoing embodiments, or the communication device 900 may be an apparatus used in the device in any one of the foregoing embodiments.

In an implementation, the communication device 900 may further include a storage unit 903, configured to store program code and data of the communication device 900. The storage unit 903 may be a memory.

The processing unit 901 may be configured to control and manage an action of the communication device 900. The processing unit 901 may be a processor or a controller, for example, a general-purpose central processing unit (central processing unit, CPU), a general-purpose processor, digital signal processing (digital signal processing, DSP), an application-specific integrated circuit (application-specific integrated circuit, ASIC), a field programmable gate array (field programmable gate array, FPGA), another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor.

The transceiver unit 902 may be an interface circuit of the communication device 900, and is configured to receive a signal from another apparatus. For example, when the communication device 900 is implemented in a form of a chip, the transceiver unit 902 may be an interface circuit used by the chip to send a signal to another chip or apparatus and receive a signal from another chip or apparatus.

The communication device 900 may be configured to implement a function of the device provided in embodiments of this application.

In a first example, when the communication device 900 is configured to implement a function of the first device provided in this embodiment of this application, the processing unit 901 may be configured to determine a first threshold, the transceiver unit 902 may be configured to detect a first signal, and the processing unit 901 may be further configured to determine, based on the first threshold and the first signal, whether to transmit a second signal. The second signal is a backscatter signal based on the first signal.

Optionally, that the processing unit 901 determines the first threshold may be: The processing unit 901 receives first signaling through the transceiver unit 902, where the first signaling indicates the first threshold.

Optionally, in this example, the first device may be the first device in Embodiment 1 or Embodiment 2.

In a second example, when the communication device 900 is configured to implement a function of the second device provided in this embodiment of this application, the transceiver unit 902 may be configured to send first signaling, where the first signaling indicates a first threshold, the first threshold is used by a first device to determine whether to transmit a second signal, and the second signal is a backscatter signal based on a first signal detected by the first device.

Optionally, the processing unit 901 may be configured to determine the first threshold.

Optionally, according to the foregoing method provided in this example, the second device may be the second device in Embodiment 1 or Embodiment 2.

Optionally, the transceiver unit 902 may be further configured to transmit the first signal. According to the method, the second device may be the second device in Embodiment 1.

In a third example, when the communication device 900 is configured to implement a function of the first device provided in this embodiment of this application, the processing unit 901 may be configured to determine a first target power value, the transceiver unit 902 may be configured to detect a first signal, and the processing unit 901 may be further configured to determine, based on the first target power value and the first signal, whether to transmit a second signal. The second signal is a backscatter signal based on the first signal.

Optionally, that the processing unit 901 determines the first target power value may be: The processing unit 901 receives first signaling through the transceiver unit 902, where the first signaling indicates the first target power value.

Optionally, in this example, the first device may be the first device in Embodiment 3 or Embodiment 4.

In a fourth example, when the communication device 900 is configured to implement a function of the second device provided in this embodiment of this application, the transceiver unit 902 may be configured to send first signaling, where the first signaling includes a first target power value, the first target power value is used by a first device to determine whether to transmit a second signal, and the second signal is a backscatter signal based on a first signal detected by the first device.

Optionally, the processing unit 901 may be configured to determine the first target power value.

Optionally, according to the foregoing method provided in this example, the second device may be the second device in Embodiment 3 or Embodiment 4.

Optionally, the transceiver unit 902 may be further configured to transmit the first signal. According to the method, the second device may be the second device in Embodiment 3.

In a fifth example, when the communication device 900 is configured to implement a function of the third device provided in this embodiment of this application, the transceiver unit 902 may be configured to transmit the first signal. Optionally, the processing unit 901 may be configured to generate the first signal.

Optionally, in this example, the third device may be the third device in Embodiment 2 or Embodiment 4.

In a possible design, the transceiver unit 902 may include a sending unit and a receiving unit. The sending unit may be configured to perform a sending operation in the foregoing method embodiments, and the receiving unit may be configured to perform a receiving operation in the foregoing method embodiments.

The foregoing gives examples of methods in which the communication device 900 performs some operations of the device. It may be understood that the processing unit 901 may be further configured to perform steps or operations related to processing that are performed by the device in the foregoing method embodiments other than receiving and sending, and the transceiver unit 902 may be further configured to perform steps or operations related to sending and/or receiving that are performed by the device in the foregoing method embodiments. For details, refer to related descriptions in the foregoing method embodiments. Details are not described herein again.

It should be understood that functional unit division in this embodiment of this application is an example, and is merely logical function division. In actual implementation, there may be another division manner. For example, the transceiver unit 902 may be split into a sending unit, a receiving unit, and the like. In addition, functional modules in embodiments of this application may be integrated into one processor, or may exist alone physically, or two or more modules may be integrated into one module. The integrated module may be implemented in a form of hardware, or may be implemented in a form of a software functional module.

Based on the foregoing embodiments and a same technical concept, this application further provides a communication device. As shown in FIG. 10, the communication device may be an implementation of a hardware circuit of the communication device shown in FIG. 5. The communication device is applicable to performing a function of any device in the foregoing method embodiments. For ease of description, FIG. 10 shows only main components of the communication device.

As shown in FIG. 10, a communication device 1000 may include at least one processor 1002. Optionally, the communication device 1000 may further include a communication interface 1001 and a memory 1003. The processor may also be referred to as a processing unit, a processing board, a processing module, a processing apparatus, or the like. The processor 1002 may be configured to execute instructions or a program stored in the memory 1003. When the instructions or the program stored in the memory 1003 is executed, the processor 1002 may be configured to perform an operation performed by the processing unit 901 in the foregoing embodiment, and the communication interface 1001 may be configured to perform an operation performed by the transceiver unit 902 in the foregoing embodiment.

The memory 1003 may be configured to store program instructions and/or data. The memory 1003 and the processor 1002 may be disposed in a coupling manner, or may be disposed separately. The coupling in this embodiment of this application may be an indirect coupling or a communication connection between apparatuses, units, or modules in an electrical form, a mechanical form, or another form, and is used for information exchange between the apparatuses, the units, or the modules. The processor 1002 may operate in cooperation with the memory 1003. The processor 1002 may execute the program instructions stored in the memory 1003. At least one of the at least one memory may be included in the processor.

In an implementation process, steps in the foregoing methods can be implemented by using a hardware integrated logic circuit in the processor, or by using instructions in a form of software. The steps of the methods disclosed with reference to embodiments of this application may be performed by a hardware processor, or may be performed by a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

Optionally, the processor in this embodiment of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processing circuit (DSP), an application specific integrated circuit (ASIC), a field programmable gate array (FPGA) or another programmable logic device, a discrete gate or a transistor logic device, or a discrete hardware component.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. It should be noted that the memory of the systems and methods described in this specification includes but is not limited to these and any memory of another proper type.

The communication interface 1001 is configured to communicate with another device via a transmission medium, so that an apparatus in the communication device 1000 can communicate with the another device. In this embodiment of this application, the communication interface may be a transceiver, a circuit, a bus, a module, or a communication interface of another type. In this embodiment of this application, when the communication interface is a transceiver, the transceiver may include an independent receiver and an independent transmitter; or the communication interface may be a transceiver integrating a transceiver function, or an interface circuit. The transceiver may also be referred to as a transceiver unit, a transceiver device, a transceiver apparatus, or the like. The receiver may also be sometimes referred to as a receiver device, a receiving module, a receiver circuit, or the like. The transmitter may also be sometimes referred to as a transmitter, a transmitter device, a transmit module, a transmitting circuit, or the like. The processor may control the transceiver to receive or send a signal. When the transceiver includes the receiver and the transmitter, the processor may control the receiver to perform a receiving operation in the foregoing method embodiments, and the processor may control the transmitter to perform a sending operation in the foregoing method embodiments.

Optionally, the communication device 1000 may further include a communication line 1004. The communication interface 1001, the processor 1002, and the memory 1003 may be connected to each other through the communication line 1004. The communication line 1004 may be a peripheral component interconnect (peripheral component interconnect, PCI for short) bus, an extended industry standard architecture (extended industry standard architecture, EISA for short) bus, or the like. The communication line 1004 may be classified into an address bus, a data bus, a control bus, and the like. For ease of representation, only one thick line is for representing the bus in FIG. 10, but this does not mean that there is only one bus or only one type of bus.

The communication device 1000 may be a device or an apparatus with a chip, a device or an apparatus with an integrated circuit, or a chip or a chip system in the terminal device or the communication device shown above. This is not specifically limited in this application, provided that the communication device 1000 can be configured to perform an operation performed by the device in the foregoing method embodiments.

Based on the foregoing embodiments and a same technical concept, an embodiment of this application further provides a computer-readable storage medium. The computer-readable storage medium stores a computer program or instructions. When the computer program or the instructions are run on a communication device, the communication device is caused to perform the method applied to any device as provided in the foregoing embodiments.

Based on the foregoing embodiments and a same technical concept, an embodiment of this application further provides a computer program product. The computer program product includes a computer program or instructions. When the computer program or the instructions are executed by a communication device, the method applied to any device as provided in the foregoing embodiments is implemented.

Based on the foregoing embodiments and a same technical concept, an embodiment of this application further provides a chip system. The chip system includes a processor. The processor is configured to read and execute a software program stored in a memory, to implement the method applied to any device as provided in the foregoing embodiments.

Optionally, the processor may be a processing module, a microprocessor, or an integrated circuit integrated in the chip system.

Optionally, the chip system may further include the memory, and the memory may be coupled to the processor through an interface.

Optionally, the chip system may further include a transceiver, and the transceiver may be an input/output circuit or a communication interface. Optionally, the transceiver may include a receiver and a transmitter.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, applied to a side of a first device, wherein the method comprises:
receiving first signaling, wherein the first signaling indicates a first threshold;
detecting a first signal; and
determining, based on the first threshold and the first signal, whether to transmit a second signal, wherein the second signal is a backscatter signal based on the first signal.

2. The method according to claim 1, wherein the determining, based on the first threshold and the first signal, whether to transmit the second signal comprises at least one of the following:
when a sum of signal strength of the detected first signal and a half of a power parameter of the first device is greater than or equal to the first threshold, determining to transmit the second signal;
when signal strength of the detected first signal is greater than or equal to the first threshold, determining to transmit the second signal;
when a sum of signal strength of the detected first signal and a half of a power parameter of the first device is less than the first threshold, determining not to transmit the second signal;
when signal strength of the detected first signal is less than the first threshold, determining not to transmit the second signal;
when a sum of signal strength of the detected first signal, a product of a power amplification parameter of the first device and a sum of the signal strength of the detected first signal and a power loss parameter of the first device, and a first specified value is greater than or equal to the first threshold, determining to transmit the second signal;
when a sum of signal strength of the detected first signal and a product of a power amplification parameter of the first device and a sum of the signal strength of the detected first signal and a power loss parameter of the first device is greater than or equal to the first threshold, determining to transmit the second signal;
when a sum of signal strength of the detected first signal, a product of a power amplification parameter of the first device and a sum of the signal strength of the detected first signal and a power loss parameter of the first device, and a first specified value is less than the first threshold, determining not to transmit the second signal;
when a sum of signal strength of the detected first signal and a product of a power amplification parameter of the first device and a sum of the signal strength of the detected first signal and a power loss parameter of the first device is less than the first threshold, determining not to transmit the second signal;
when a path loss for transmitting the second signal is less than or equal to the first threshold, determining to transmit the second signal; or
when a path loss for transmitting the second signal is greater than the first threshold, determining not to transmit the second signal.

3. The method according to claim 1 or 2, wherein the first signal is a signal on a first path, and the transmitting the second signal comprises:
transmitting the second signal on the first path; or
transmitting the second signal on a second path.

4. The method according to any one of claims 1 to 3, wherein the first signaling comprises the first threshold or a first threshold range, wherein
the first threshold range is for determining the first threshold.

5. The method according to claim 4, wherein the method further comprises:
receiving second signaling, wherein the second signaling indicates a first power loss parameter range, and the first power loss parameter range is for determining the first threshold.

6. The method according to claim 5, wherein
a difference between the power loss parameter of the first device and a lower bound of the first power loss parameter range is equal to a difference between the first threshold and a lower bound of the first threshold range; and/or
a difference between an upper bound of the first power loss parameter range and the power loss parameter of the first device is equal to a difference between an upper bound of the first threshold range and the first threshold.

7. The method according to any one of claims 1 to 6, wherein before receiving the first signaling, the method further comprises:
sending third signaling, wherein the third signaling indicates the power loss parameter of the first device.

8. The method according to any one of claims 1 to 7, wherein the method further comprises:
when determining not to transmit the second signal, performing energy storage.

9. The method according to any one of claims 1 to 8, wherein the first signal is an excitation signal.

10. A communication method, applied to a side of a second device, wherein the method comprises:
sending first signaling, wherein the first signaling indicates a first threshold, the first threshold is used by a first device to determine whether to transmit a second signal, and the second signal is a backscatter signal based on a first signal detected by the first device.

11. A communication method, applied to a side of a first device, wherein the method comprises:
receiving first signaling, wherein the first signaling indicates a first target power value;
detecting a first signal; and
determining, based on the first target power value and the first signal, whether to transmit a second signal, wherein the second signal is a backscatter signal based on the first signal.

12. The method according to claim 11, wherein the determining, based on the first target power value and the first signal, whether to transmit the second signal comprises:
determining a target transmit power of the second signal based on the first target power value;
determining, based on the first signal, a power for transmitting the second signal; and
determining, based on the target transmit power of the second signal and the power for transmitting the second signal, whether to transmit the second signal.

13. The method according to claim 12, wherein the determining, based on the target transmit power of the second signal and the power for transmitting the second signal, whether to transmit the second signal comprises:
when the power for transmitting the second signal is greater than or equal to the target transmit power of the second signal, determining to transmit the second signal; and/or
when the power for transmitting the second signal is less than the target transmit power of the second signal, determining not to transmit the second signal.

14. The method according to claim 12 or 13, wherein the first signal is a signal on a first path, and the transmitting the second signal comprises:
transmitting the second signal on the first path; or
transmitting the second signal on a second path.

15. The method according to any one of claims 12 to 14, wherein the determining the target transmit power of the second signal based on the first target power value comprises:
determining a path loss for transmitting the second signal;
determining a target transmit power candidate value of the second signal based on the first target power and the path loss for transmitting the second signal; and
using the target transmit power candidate value of the second signal as the target transmit power of the second signal; or using a smaller value between the target transmit power candidate value of the second signal and a specified power value as the target transmit power of the second signal.

16. The method according to claim 15, wherein the determining the path loss for transmitting the second signal comprises:
determining, based on a transmit power of the first signal and signal strength of the detected first signal, the path loss for transmitting the second signal.

17. The method according to claim 16, wherein before determining the path loss for transmitting the second signal, the method further comprises:
receiving second signaling, wherein the second signaling indicates the transmit power of the first signal.

18. The method according to any one of claims 12 to 17, wherein the determining, based on the first signal, the power for transmitting the second signal comprises:
determining, based on the signal strength of the detected first signal and a power parameter of the first device, the power for transmitting the second signal.

19. The method according to claim 18, wherein the determining, based on the signal strength of the detected first signal and the power parameter of the first device, the power for transmitting the second signal comprises:
using a sum of the signal strength of the detected first signal and the power parameter of the first device as the power for transmitting the second signal;
using a product of a power amplification parameter of the first device and a sum of the signal strength of the detected first signal and a power loss parameter of the first device as the power for transmitting the second signal; or
using a sum of a first specified value and a product of a power amplification parameter of the first device and a sum of the signal strength of the detected first signal and a power loss parameter of the first device as the power for transmitting the second signal.

20. The method according to any one of claims 11 to 19, wherein the first signaling comprises any one of the following:
the first target power value;
a ratio of the first target power value to a first specified power value; or
a power level corresponding to the first target power value, wherein different power levels correspond to different power values.

21. The method according to claim 20, wherein the method further comprises:
when the first signaling comprises the ratio, determining the first target power value based on the ratio and the first specified power value; or
when the first signaling comprises the power level, determining the first target power value based on the power level.

22. The method according to claim 20 or 21, wherein the first target power value corresponds to a first distance range, and a distance over which the second signal is to be transmitted is within the first distance range.

23. The method according to any one of claims 11 to 22, wherein the method further comprises:
when determining not to transmit the second signal, performing energy storage.

24. The method according to any one of claims 11 to 23, wherein the first signal is an excitation signal.

25. A communication method, applied to a side of a second device, wherein the method comprises:
sending first signaling, wherein the first signaling comprises a first target power value, the first target power value is used by a first device to determine whether to transmit a second signal, and the second signal is a backscatter signal based on a first signal detected by the first device.

26. A communication device, comprising at least one processor, wherein the at least one processor is configured to cause the communication device to perform the method according to any one of claims 1 to 9, perform the method according to claim 10, perform the method according to any one of claims 11 to 24, or perform the method according to claim 25.

27. A communication device, comprising a module or unit configured to perform the method according to any one of claims 1 to 9, a module or unit configured to perform the method according to claim 10, a module or unit configured to perform the method according to any one of claims 11 to 24, or a module or unit configured to perform the method according to claim 25.

28. A computer-readable storage medium, wherein the storage medium stores a computer program or instructions; and when the computer program or the instructions are run on a communication device, the communication device is caused to perform the method according to any one of claims 1 to 9, perform the method according to claim 10, perform the method according to any one of claims 11 to 24, or perform the method according to claim 25.

29. A computer program product, wherein the computer program product comprises a computer program or instructions; and when the computer program or the instructions are run on a communication device, the communication device is caused to perform the method according to any one of claims 1 to 9, perform the method according to claim 10, perform the method according to any one of claims 11 to 24, or perform the method according to claim 25.
